# EUROPÄISCHE PATENTANMELDUNG

(11) **EP 3 242 205 A1**
(43) Veröffentlichungstag der Anmeldung: **08.11.2017**
(21) Anmeldenummer: 16001048.4
(22) Anmeldetag: 04.05.2016
(51) Int. Cl.: G06F 9/445

(54) **VERFAHREN ZUR AKTUALISIERUNG DER KONFIGURATION EINER FAHRZEUGEINRICHTUNG, FAHRZEUGEINRICHTUNG, ZENTRALE DATENVERARBEITUNGSEINRICHTUNG UND MAUTSYSTEM**

(71) Anmelder: Toll Collect GmbH, 10785 Berlin (DE)
(72) Erfinder: Lohfelder, Thomas, 15834 Rangsdorf (DE); Krug, Robert, 12207 Berlin (DE)

(57) **Zusammenfassung**

Es werden ein Verfahren, eine Fahrzeugeinrichtung und ein zentrale Datenverarbeitungseinrichtung vorgeschlagen, die zur Aktualisierung einer Ist-Konfiguration einer Fahrzeugeinrichtung dienen, die von der in einer zentralen Datenverarbeitungsvorrichtung vorliegenden Soll-Konfiguration verschieden ist, wobei ein dezentraler Hashwert der Ist-Konfiguration von der Fahrzeugeinrichtung an die zentrale Datenverarbeitungseinrichtung gesendet wird, welche den dezentralen Hashwert mit einem zentralen Hashwert der Soll-Konfiguration vergleicht und im Falle einer mangelnden Übereinstimmung des dezentralen Hashwerts mit dem zentralen Hashwert wenigstens einen Soll-Wert eines. Konfigurationsparameters der Soll-Konfiguration an die Fahrzeugeinrichtung sendet, der von dem Ist-Wert dieses Konfigurationsparameters der Ist-Konfiguration verschieden ist.

## Beschreibung

Die vorliegende Erfindung betrifft ein Verfahren gemäß dem Oberbegriff des Anspruchs 1 sowie eine Fahrzeugeinrichtung, eine zentrale Datenverarbeitungseinrichtung und ein Mautsystem nach den Oberbegriffen der Ansprüche 11, 13 und 15.

Für eine in einer Fahrzeugeinrichtung gespeicherte aktualisierungsbedürftige Ist-Konfigurationen von dezentralen Werten mehrerer Konfigurationsparameter dieser Fahrzeugeinrichtung besteht das Problem, sie im Zuge einer Aktualisierung der Ist-Konfiguration durch diejenigen zentralen Werte einer in einer zentralen Datenverarbeitungseinrichtung gespeicherten Soll-Konfiguration zu ersetzen, die bezüglich des jeweiligen Konfigurationsparameters von den dezentralen Werten verschieden sind. In dem Fall, in dem die Ist-Konfiguration sehr viele dezentrale Werte umfasst und die Aktualisierung die Übertragung großer Datenmengen erfordert, besteht die Aufgabe, Maßnahmen vorzusehen, mit denen effizient ermittelt werden kann, ob eine Aktualisierung überhaupt nötig ist oder mangels unterschiedlicher Konfigurationen nicht erfolgen muss.

Diese Aufgabe wird durch ein Verfahren zur Aktualisierung nach dem Anspruch 1, eine Fahrzeugeinrichtung nach Anspruch 11, eine zentrale Datenverarbeitungseinrichtung nach Anspruch 13 und ein Mautsystem nach Anspruch 15 gelöst. Vorteilhafte Weiterbildungen sind Gegenstand abhängiger Ansprüche. Merkmale und Vorteile verschiedener Ausführungsformen und Ausführungsbeispiele gelten auf die jeweils andere Ausführungsform und Ausführungsbeispiele übertragbar oder austauschbar, soweit dies technisch und widerspruchsfrei möglich ist.

Zusammengefasst werden ein Verfahren, eine Fahrzeugeinrichtung und ein zentrale Datenverarbeitungseinrichtung vorgeschlagen, die zur Aktualisierung einer Ist-Konfiguration einer Fahrzeugeinrichtung dienen, die von der in einer zentralen Datenverarbeitungsvorrichtung vorliegenden Soll-Konfiguration verschieden ist, wobei ein dezentraler Hashwert der Ist-Konfiguration von der Fahrzeugeinrichtung an die zentrale Datenverarbeitungseinrichtung gesendet wird, welche den dezentralen Hashwert mit einem zentralen Hashwert der Soll-Konfiguration vergleicht und im Falle einer mangelnden Übereinstimmung des dezentralen Hashwerts mit dem zentralen Hashwert wenigstens einen Soll-Wert eines Konfigurationsparameters der Soll-Konfiguration an die Fahrzeugeinrichtung sendet, der von dem Ist-Wert dieses Konfigurationsparameters der Ist-Konfiguration verschieden ist.

Gemäß einem ersten Aspekt der Erfindung wird ein Verfahren zur Aktualisierung von wenigstens einem Wert eines Konfigurationsparameters in einer Fahrzeugeinrichtung mittels einer zentralen Datenverarbeitungseinrichtung, die abseits der Fahrzeugeinrichtung angeordnet ist, vorgeschlagen, wobei eine in der Fahrzeugeinrichtung gespeicherte aktualisierungsbedürftige Ist-Konfiguration von dezentralen Werten mehrerer Konfigurationsparameter der Fahrzeugeinrichtung in eine in der Fahrzeugeinrichtung gespeicherte vollständig aktualisierte Ist-Konfiguration von Werten mehrerer Konfigurationsparameter der Fahrzeugeinrichtung überführt wird, die einer in der zentralen Datenverarbeitungseinrichtung zugeordnet zu einer Kennung der Fahrzeugeinrichtung gespeicherten Soll-Konfiguration von mehreren zentralen Werten dieser Konfigurationsparameter entspricht, wobei im Rahmen wenigstens einer zwischen der Fahrzeugeinrichtung und der zentralen Datenverarbeitungseinrichtung bestehenden Kommunikationsverbindung (a) die Fahrzeugeinrichtung einen initialen dezentralen Hashwert der aktualisierungsbedürftigen Ist-Konfiguration an die zentrale Datenverarbeitungseinrichtung sendet, (b) die zentrale Datenverarbeitungseinrichtung nach dem Empfang des initialen dezentralen Hashwerts (i) den empfangenen initialen dezentralen Hashwert mit einem zentralen Hashwert der Soll-Konfiguration vergleicht und im Falle eines Unterschieds zwischen dem initialen dezentralen Hashwert und dem zentralen Hashwert (ii) wenigstens einen ersten zentralen Wert wenigstens eines ersten Konfigurationsparameters, der von einem ersten dezentralen Wert des ersten Konfigurationsparameters verschieden ist, in einer ersten Aktualisierungsaufforderungsnachricht an die Fahrzeugeinrichtung sendet, (c) die Fahrzeugeinrichtung nach dem Empfang der ersten Aktualisierungsaufforderungsnachricht einen finalen dezentralen Hashwert einer aktualisierten Ist-Konfiguration von Werten der mehreren Konfigurationsparameter, die den wenigstens einen ersten zentralen Wert des wenigstens einen ersten Konfigurationsparameters umfasst, an die zentrale Datenverarbeitungseinrichtung sendet, (d) die zentrale Datenverarbeitungseinrichtung infolge des Empfangs des finalen dezentralen Hashwerts (i) den empfangenen finalen dezentralen Hashwert mit einem zentralen Hashwert der Soll-Konfiguration vergleicht und im Falle einer Übereinstimmung des finalen dezentralen Hashwerts mit dem zentralen Hashwert (ii) eine Aktualisierungsbeendigungsnachricht an die Fahrzeugeinrichtung sendet und/ oder eine mit der Fahrzeugeinrichtung bestehende Kommunikationsverbindung abbricht, und (e) die Fahrzeugeinrichtung, falls sie die Aktualisierungsbeendigungsnachricht empfängt, eine mit der zentralen Datenverarbeitungseinrichtung bestehende Kommunikationsverbindung abbricht, sofern diese nicht seitens der zentralen Datenverarbeitungseinrichtung abgebrochen wird.

Mit einem solchen Verfahren wird es vorteilhaft möglich, sehr datensparsam zu prüfen, ob eine Aktualisierung überhaupt nötig ist. Nur wenn die Prüfung einen Unterschied des initialen dezentralen Hashwerts von dem zentralen Hashwert ergibt, ist eine weitere Kommunikation zur tatsächlichen Aktualisierung von wenigstens einem dezentralen Werte der Ist-Konfiguration auf einen zentralen Wert der Soll-Konfiguration nötig. Eine datenverschwenderische "blinde" Aktualisierung ohne ein vorheriges Abprüfen auf einen Aktualisierungsbedarf wird somit vorteilhaft vermieden.

Insbesondere handelt es sich bei der Fahrzeugeinrichtung um ein im oder am Fahrzeug angeordnetes, befestigtes und/ oder eingebautes Gerät oder um ein im oder am Fahrzeug angeordnetes, befestigtes und/ oder eingebautes Gerätesystem mit untereinander kommunikationstechnisch verbundenen Sende- und/ oder Empfangskomponenten (Mobilfunkmodul, Mobilfunkantenne, GNSS-Modul, GNSS-Antenne).
Insbesondere handelt es sich bei der zentralen Datenverarbeitungseinrichtung um eine von einem Fahrzeug, in oder an dem die Fahrzeugeinrichtung angeordnet und/ oder befestigt ist, beabstandet angeordnete zentrale Datenverarbeitungseinrichtung.

Insbesondere ist mit dem ersten dezentralen Wert ist ein erster der empfangenen dezentralen Werte gemeint und mit dem ersten zentralen Wert ist ein erster der zentralen Werte gemeint.

Ein initialer dezentraler Hashwert der Ist-Konfiguration ist beispielsweise ein dezentraler Hashwert eines dezentralen Konfigurationsdatensatzes, der die dezentralen Werte der Konfigurationsparameter der aktualisierungsbedürftigen Ist-Konfiguration umfasst.

Ein finaler dezentraler Hashwert der aktualisierten Ist-Konfiguration ist beispielsweise ein dezentraler Hashwert eines dezentralen Konfigurationsdatensatzes, der die dezentralen Werte der Konfigurationsparameter der aktualisierten Ist-Konfiguration einschließlich des wenigstens einen ersten Wertes umfasst.
Ein zentraler Hashwert der Soll-Konfiguration ist beispielsweise ein zentraler Hashwert eines zentralen Konfigurationsdatensatzes, der die zentralen Werte der Konfigurationsparameter der Soll-Konfiguration umfasst.

Beispielsweise bildet die Fahrzeugeinrichtung den initialen dezentralen Hashwert durch die Anwendung einer in der Fahrzeugeinrichtung gespeicherten Hashfunktion auf einen Datensatz aller dezentralen Werte der mehreren Konfigurationsparametern der Ist-Konfiguration.
Beispielweise bildet die Fahrzeugeinrichtung den finalen dezentralen Hashwert durch die Anwendung dieser in der Fahrzeugeinrichtung gespeicherten Hashfunktion auf einen Datensatz aller dezentralen Werte der mehreren Konfigurationsparametern der Ist-Konfiguration mit Ausnahme desjenigen ersten dezentralen Wertes, der nach Empfang der ersten Aktualisierungsaufforderungsnachricht durch den ersten zentralen Wert ersetzt wurde.
Beispielsweise bildet die zentrale Datenverarbeitungseinrichtung den zentralen Hashwert durch die Anwendung einer in der zentralen Datenverarbeitungseinrichtung gespeicherten Hashfunktion, die der in der Fahrzeugeinrichtung gespeicherten Hashfunktion entspricht, auf einen Datensatz aller zentralen Werte der mehreren Konfigurationsparametern der Soll-Konfiguration.

Insbesondere ist mit dem ersten dezentralen Wert der dezentrale Wert eines ersten Konfigurationsparameters der Ist-Konfiguration gemeint. Insbesondere ist mit dem ersten zentralen Wert der zentrale Wert eines ersten Konfigurationsparameters der Soll-Konfiguration gemeint.

Bevorzugt sieht das erfindungsgemäße Verfahren vor, dass die Fahrzeugeinrichtung vor der Ausführung des Schrittes (a) zum einen wenigstens ein Auslöseereignis registriert, das wenigstens einem vorgegebenen Auslöseereignis entspricht, und zum anderen den Aufbau einer initiale Kommunikationsverbindung zu der zentralen Datenverarbeitungseinrichtung initiiert, und dass die Fahrzeugeinrichtung den Schritt (a) infolge der Registrierung des Auslöseereignisses und dem Aufbau der initialen Kommunikationsverbindung ausführt.

Besonders bevorzugt sieht das erfindungsgemäße Verfahren in diesem Fall vor, dass die Fahrzeugeinrichtung infolge des Abbruchs der Kommunikationsverbindung durch die zentrale Datenverarbeitungseinrichtung in Schritt (d) und/ oder infolge des Empfangs der Aktualisierungsbeendigungsnachricht in Schritt (e) keinen weiteren dezentralen Hashwert einer Ist-Konfiguration an die zentrale Datenverarbeitungseinrichtung sendet, bevor sie nicht wenigstens ein weiteres Auslöseereignis registriert, das wenigstens einem vorgegebenen Auslöseereignis entspricht.

Insbesondere sendet die Fahrzeugeinrichtung im Schritt (a) den initialen dezentralen Hashwert zusammen mit der Kennung der Fahrzeugeinrichtung (beispielsweise eine Seriennummer der Fahrzeugeinrichtung) des ersten Konfigurationsparameters in der ersten Aktualisierungsaufforderungsnachricht an die zentrale Datenverarbeitungseinrichtung. Die zentrale Datenverarbeitungseinrichtung kann anhand der empfangenen Kennung ermitteln, welche Soll-Konfiguration von zentralen Werten diejenige ist, die für die Fahrzeugeinrichtung bestimmt ist, von der sie den initialen dezentralen Hashwert empfangen hat.

Insbesondere sendet die zentrale Datenverarbeitungseinrichtung sendet im Schritt (b) den ersten zentralen Wert des ersten Konfigurationsparameters zusammen mit wenigstens einer Identifikation (beispielsweise einer Bezeichnung und/ oder einer Nummer) des ersten Konfigurationsparameters in der ersten Aktualisierungsaufforderungsnachricht an die Fahrzeugeinrichtung.

Insbesondere speichert die Fahrzeugeinrichtung nach dem Empfang der ersten Aktualisierungsaufforderungsnachricht in Schritt (c) den empfangenen ersten zentralen Wert als ersten dezentralen Wert der aktualisierten Ist-Konfiguration in einem Speicher der Fahrzeugeinrichtung, bevor sie in den finalen dezentralen Hashwert der aktualisierten Ist-Konfiguration der Werte der mehreren Konfigurationsparameter einschließlich des ersten zentralen Wertes des ersten Konfigurationsparameters an die zentrale Datenverarbeitungseinrichtung sendet.

Insbesondere kann die Aktualisierungsbeendigungsnachricht eine Bestätigung darüber enthalten, dass die Ist-Konfiguration mit der Soll-Konfiguration übereinstimmt. Mit einer solchen Bestätigung, insbesondere einer Bestätigung mit einem Zeitstempel beispielsweise ihrer Erzeugung, ihres Versand und/ oder ihres Empfangs, kann sich die Fahrzeugeinrichtung gegenüber einer straßenseitigen Kontrolleinrichtung beispielweise im Wege einer DSRC-Kommunikation bezüglich der Aktualität ihrer ist-Konfiguration ausweisen.

In einer ersten Weiterbildung des erfindungsgemäßen Verfahrens ist vorgesehen, dass im Schritt (b) ii) die zentrale Datenverarbeitungseinrichtung die zentralen Werte aller Konfigurationsparameter der Soll-Konfiguration einschließlich des ersten zentralen Wertes des ersten Konfigurationsparameters in der ersten Aktualisierungsaufforderungsnachricht an die Fahrzeugeinrichtung sendet.
Damit wird in jedem Fall auch der erfindungsgemäße erste zentrale Wert wenigstens eines ersten Konfigurationsparameters, der von einem ersten dezentralen Wert des ersten Konfigurationsparameters verschieden ist, in der ersten Aktualisierungsaufforderungsnachricht an die Fahrzeugeinrichtung sendet, ohne dass der zentralen Datenverarbeitungseinrichtung bekannt ist, welcher zentraler Wert dieser erste zentrale Wert ist, der von dem ersten dezentralen Wert verschieden ist. Sollte es erforderlich sein, diesen ersten Wert als solchen zu identifizieren, so kann dies von der Fahrzeugeinrichtung im Schritt c) durch Vergleich der empfangen zentralen Werte mit den in der Fahrzeugeinrichtung gespeicherten dezentralen Werten erfolgen. Das Ergebnis über alle diejenigen Konfigurationsparameter - einschließlich des ersten Konfigurationsparameters - , deren dezentralen Werte von den zentralen Werten verschieden sind, kann im Anschluss an diese Identifizierung von der Fahrzeugeinrichtung zusammen mit dem finalen dezentralen Hashwert an die zentrale Datenverarbeitungseinrichtung gesendet werden.
Diese erste Weiterbildung ist diejenige, die die Anzahl der zur Aktualisierung nötigen Kommunikationen zwischen der Fahrzeugeinrichtung und der zentralen Datenverarbeitungseinrichtung minimiert. Da in der ersten Weiterbildung die zentralen Werte aller Konfigurationsparameter übermittelt werden (unabhängig davon, welche dezentralen Werte im Einzelnen aktualisierungsbedürftig sind), ist sie jedoch nicht notwendigerweise die datensparsamste der möglichen Weiterbildungen zur Durchführung der Aktualisierung. Denn in dem Fall, in dem außer dem ersten dezentralen Wert kein weiterer dezentraler Wert von einem zentralen Wert verschieden ist, werden unnötigerweise zentrale Werte, die mit dezentralen Werten übereinstimmen, an die Fahrzeugeinrichtung übermittelt.

In einer zur ersten Weiterbildung alternativen zweiten Weiterbildung des erfindungsgemäßen Verfahrens ist vorgesehen nach dem Schritt (b) i) und vor dem Schritt (b) ii) im Falle eines Unterschieds zwischen dem initialen dezentralen Hashwert und dem zentralen Hashwert i1) die zentrale Datenverarbeitungseinrichtung eine Anforderungsnachricht an die Fahrzeugeinrichtung sendet, mit der von der Fahrzeugeinrichtung eine initiale Statusnachricht angefordert wird, i2) die Fahrzeugeinrichtung infolge des Empfangs der Anforderungsnachricht in der initialen Statusnachricht die aktualisierungsbedürftige Ist-Konfiguration mit den dezentralen Werten der Konfigurationsparameter an die zentrale Datenverarbeitungseinrichtung sendet, und i3) die zentrale Datenverarbeitungseinrichtung infolge des Empfangs der initialen Statusnachricht als den wenigstens einen ersten zentralen Wert denjenigen des wenigstens einen ersten Konfigurationsparameters ermittelt, dessen zentraler Wert von dem dezentralen Wert verschieden ist.

Dabei kann im Schritt b) i3) die zentrale Datenverarbeitungseinrichtung die von der Fahrzeugeinrichtung mit der ersten Statusnachricht gesendeten dezentralen Werte empfangen und wenigstens einen dezentralen Wert mit einem in der zentralen Datenverarbeitungseinrichtung gespeicherten zentralen Wert des entsprechenden Konfigurationsparameter der Soll-Konfiguration vergleichen und als ersten zentralen Wert einen zentralen Wert eines ersten Konfigurationsparameters bestimmen, dessen dezentraler Wert von seinem zentralen Wert verschieden ist.

Insbesondere kann vorgesehen sein, dass die zentrale Datenverarbeitungseinrichtung infolge des Empfangs der initialen Statusnachricht eine den ersten zentralen Wert umfassende Gruppe von den zentralen Werten aller derjenigen bestimmten Konfigurationsparameter, deren dezentraler Wert jeweils von dem zentralen Werten verschieden ist, in der ersten Aktualisierungsaufforderungsnachricht an die Fahrzeugeinrichtung sendet und im Schritt (b) ii) die Fahrzeugeinrichtung nach dem Empfang der ersten Aktualisierungsaufforderungsnachricht in der finalen Statusnachricht eine aktualisierte Ist-Konfiguration der Werte der mehreren Konfigurationsparameter einschließlich der den ersten zentralen Wert umfassenden Gruppe der zentralen Werte der bestimmten Konfigurationsparameter an die zentrale Datenverarbeitungseinrichtung sendet.

Alternativ dazu kann vorgesehen sein, dass im Schritt b) ii) die zentrale Datenverarbeitungseinrichtung außer dem ersten zentralen Wert des ersten Konfigurationsparameters keinen weiteren zentralen Wert eines weiteren Konfigurationsparameters in der ersten Aktualisierungsaufforderungsnachricht an die Fahrzeugeinrichtung sendet, im Schritt c) in wenigstens einem dem Senden des finalen dezentralen Hashwerts vorhergehenden Zwischenschritt (c) i) die Fahrzeugeinrichtung wenigstens einen intermediären dezentralen Hashwert einer den ersten zentralen Wert des ersten Konfigurationsparameters umfassenden teilaktualisierten Ist-Konfiguration von Werten der mehreren Konfigurationsparameter an die zentrale Datenverarbeitungseinrichtung sendet, (c) ii) die zentrale Datenverarbeitungseinrichtung nach dem Empfang des intermediären dezentralen Hashwerts wenigstens einen weiteren zentralen Wert, der von einem weiteren dezentralen Wert wenigstens eines weiteren Konfigurationsparameters verschieden ist, in wenigstens einer weiteren Aktualisierungsaufforderungsnachricht an die Fahrzeugeinrichtung sendet, und die aktualisierte Ist-Konfiguration, von der im Schritt c) die Fahrzeugeinrichtung den finalen dezentralen Hashwert sendet, den ersten zentralen Wert des ersten Konfigurationsparameters und wenigstens einen weiteren zentralen Wert des weiteren Konfigurationspärameters umfasst.

Dabei kann im Schritt b) i3) die zentrale Datenverarbeitungseinrichtung im Falle der Verschiedenartigkeit von dezentralen und zentralen Werten mehrerer Konfigurationsparameter den ersten zentralen Wert nach Maßgabe einer in der zentralen Datenverarbeitungseinrichtung gespeicherten Aktualisierungsordnung bestimmen, die eine Aktualisierung des ersten Konfigurationsparameters im Zeitrang vor wenigstens einem anderen Konfigurationsparameter vorsieht.
Dazu führt die zentrale Datenverarbeitungseinrichtung entweder einen schrittweisen Vergleich nach der Aktualisierungsordnung und eine Verwendung desjenigen Konfigurationsparameters als erstem Konfigurationsparameter durch, für den ein erster Vergleich seiner dezentralen und zentralen Werte deren Verschiedenheit ergeben hat oder führt die zentrale Datenverarbeitungseinrichtung eine Ermittlung mehrerer, vorzugsweise aller, aktualisierungsbedürftigen Konfigurationsparameter; deren zentrale und dezentrale Werte verschieden sind, und anschließende Verwendung desjenigen aktualisierungsbedürftigen Konfigurationsparameters als erstem Konfigurationsparameter durch, der in der Aktualisierungsordnung gegenüber jedem anderen aktualisierungsbedürftigen Konfigurationsparameter den höchsten Rang einnimmt.
Ferner kann dabei in Schritt (c) der Zwischenschritt so oft für weitere zentrale Werte verschiedener weiterer Konfigurationsparameter wiederholt werden, bis für die betreffende Fahrzeugeinrichtung von keinem weiteren Konfigurationsparameter mehr ein weiterer zentraler Wert in der zentralen Datenverarbeitungseinrichtung vorliegt, der von dem dezentralen Wert verschieden ist.
Dafür kann in Schritt c) der Zwischenschritt so oft für weitere zentrale Werte verschiedener weiterer Konfigurationsparameter wiederholt werden, bis alle Werte der mehreren Konfigurationsparameter der aktualisierten Ist-Konfiguration gleich den zentralen Werten der mehreren Konfigurationsparameter sind.

Es kann im erfindungsgemäßen Verfahren vorgesehen sein, dass vorhergehend zum oder im Schritt (a) die Fahrzeugeinrichtung zum Senden des initialen dezentralen Hashwerts den Aufbau einer Kommunikationsverbindung zu der zentralen Datenverarbeitungseinrichtung initiiert, von dem Schritt (a) bis zum Schritt (d) oder (e) über alle dazwischenliegenden Schritte (b) bis (c) oder (d) hinweg die Fahrzeugeinrichtung und die zentrale Datenverarbeitungseinrichtung die aufgebaute Kommunikationsverbindung zwischen der Fahrzeugeinrichtung und der zentralen Datenverarbeitungseinrichtung aufrecht erhalten und im Schritt (d) oder (e) die zentrale Datenverarbeitungseinrichtung oder die Fahrzeugeinrichtung die initiierte Kommunikationsverbindung zwischen der Fahrzeugeinrichtung und zentralen Datenverarbeitungseinrichtung abbricht.

Alternativ dazu kann im erfindungsgemäßen Verfahren vorgesehen sein, dass vorhergehend zum oder im Schritt (a) die Fahrzeugeinrichtung zum Senden des initialen dezentralen Hashwerts den Aufbau einer initialen Kommunikationsverbindung zu der zentralen Datenverarbeitungseinrichtung initiiert, im Schritt (b) die zentrale Datenverarbeitungseinrichtung mit der ersten Aktualisierungsaufforderungsnachricht eine Aufforderung an die Fahrzeugeinrichtung sendet, die aufgebaute erste Kommunikationsverbindung abzubrechen, oder nach dem Versand der ersten Aktualisierungsaufforderungsnachricht die aufgebaute erste Kommunikationsverbindung mit der Fahrzeugeinrichtung von sich aus abbricht, vorhergehend zum oder im Schritt (c) die Fahrzeugeinrichtung zum Senden des finalen dezentralen Hashwerts den Aufbau einer finalen Kommunikationsverbindung zu der zentralen Datenverarbeitungseinrichtung initiiert, und im Schritt (d) oder (e) die Fahrzeugeinrichtung oder die zentrale Datenverarbeitungseinrichtung die finale Kommunikationsverbindung zwischen der Fahrzeugeinrichtung und der zentralen Datenverarbeitungseinrichtung abbricht.

In einer bevorzugte Weiterbildung des erfindungsgemäßen Verfahrens ist vorgesehen, dass einer die Schritte (a) bis (d) oder (e) umfassende Aktualisierungstätigkeitsphase eine Aktualisierungsbereitschaftsphase vorangeht, in der die Fahrzeugeinrichtung ausgebildet ist, ein Ereignis zur Auslösung einer Aktualisierungstätigkeit zu erfassen, wobei Aktualisierungstätigkeitsphase infolge der Erfassung eines Ereignisses zur Auslösung einer Aktualisierungstätigkeit in der Fahrzeugeinrichtung beginnt.
Dabei kann die Fahrzeugeinrichtung während der Aktualisierungstätigkeitsphase infolge des Empfangs eines Anforderungssignals von einer straßenseitigen Kommunikationseinrichtung eine Nachricht über die bevorstehende oder laufende Aktualisierung der aktualisierungsbedürftigen Ist-Konfiguration im Rahmen eines Antwortsignals an diese straßenseitige Kommunikationseinrichtung senden.
Das Antwortsignal kann dabei wenigstens einen dezentralen Wert eines Konfigurationsparameters der Ist-Konfiguration umfassen.
Insbesondere ist das Ereignis zur Auslösung einer Aktualisierungstätigkeit das Ablaufen einer vorgegebenen Zeitdauer seit der zuletzt erfolgten Speicherung eines dezentralen Wertes eines Konfigurationsparameters der aktualisierungsbedürftigen Ist-Konfiguration oder seit dem zuletzt erfassten Ereignis zur Auslösung einer Aktualisierungstätigkeit und/ oder das Inbetriebnehmen, das Einschalten oder die Stromversorgung der Fahrzeugeinrichtung nach einem Außerbetriebnehmen, einem Ausschalten oder einer Stromabkopplung der Fahrzeugeinrichtung.

Weiterhin kann vorgesehen sein, dass einer die Schritte a) bis d) oder e) umfassende Aktualisierungstätigkeitsphase eine Aktualisierungserfolgsphase nachfolgt, in der die Fahrzeugeinrichtung ausgebildet ist, infolge des Empfangs eines Anforderungssignals von einer straßenseitigen Kommunikationseinrichtung wenigstens einen angeforderten dezentralen Wert wenigstens eines angeforderte Konfigurationsparameters der aktualisierten Ist-Konfiguration im Rahmen eines Antwortsignals an diese straßenseitige Kommunikationseinrichtung zu senden.
Dabei kann vorgesehen sein, dass der von der straßenseitige Kommunikationseinrichtung empfangene angeforderte dezentrale Wert an die zentrale Datenverarbeitungseinrichtung übermittelt wird, die zentrale Datenverarbeitungseinrichtung den von der straßenseitigen Kommunikationseinrichtung empfangenen angeforderten dezentralen Wert mit dem zentralen Wert des angeforderten Kommunikationsparameters vergleicht und bei mangelnder Übereinstimmung des angeforderten dezentralen Wertes mit dem zentralen Wert ein Fehlersignal erzeugt.

Ferner kann vorgesehen sein, dass die Fahrzeugeinrichtung ausgebildet ist, während der Aktualisierungstätigkeitsphase infolge des Empfangs eines Anforderungssignals von einer straßenseitigen Kommunikationseinrichtung eine Nachricht über die bevorstehende oder laufende Aktualisierung der aktualisierungsbedürftigen Ist-Konfiguration im Rahmen eines Antwortsignals an diese straßenseitige Kommunikationseinrichtung zu senden.

Gemäß einem zweiten Aspekt der Erfindung wird eine Fahrzeugeinrichtung bereitgestellt, in der eine aktualisierungsbedürftige Ist-Konfiguration von dezentralen Werten mehrerer Konfigurationsparameter der Fahrzeugeinrichtung gespeichert ist, wobei die Fahrzeugeinrichtung ausgebildet ist, im Rahmen wenigstens einer zwischen der Fahrzeugeinrichtung und einer abseits der Fahrzeugeinrichtung angeordneten zentralen Datenverarbeitungseinrichtung bestehenden Kommunikationsverbindung (a) einen initialen dezentralen Hashwert der aktualisierungsbedürftigen Ist-Konfiguration an eine abseits der Fahrzeugeinrichtung angeordnete zentrale Datenverarbeitungseinrichtung zu senden, (b) eine erste Aktualisierungsaufforderungsnachricht mit wenigstens einem ersten zentralen Wert eines ersten Konfigurationsparameters einer in der zentralen Datenverarbeitungseinrichtung gespeicherten Soll-Konfiguration von zentralen Werten der mehreren Konfigurationsparameter dieser Fahrzeugeinrichtung, der von einem ersten dezentralen Wert des ersten Konfigurationsparameters verschieden ist, von der zentralen Datenverarbeitungseinrichtung zu empfangen, (c) nach dem Empfang der ersten Aktualisierungsaufforderungsnachricht einen finalen dezentralen Hashwert einer aktualisierten Ist-Konfiguration von Werten der mehreren Konfigurationsparameter, die den wenigstens einen ersten zentralen Wert des, wenigstens einen ersten Konfigurationsparameters umfasst, an die zentrale Datenverarbeitungseinrichtung zu senden, (d) eine Aktualisierungserfolgsnachricht von der zentralen Datenverarbeitungseinrichtung zu empfangen und (e) infolge des Empfangs der Aktualisierungserfolgsnachricht die zu der zentralen Datenverarbeitungseinrichtung bestehende Kommunikationsverbindung abzubrechen.

Eine solche erfindungsgemäße Fahrzeugeinrichtung kann darüber hinaus ausgebildet sein, anstatt der ersten Aktualisierungsaufforderungsnachricht eine Bestätigungsnachricht darüber von der zentralen Datenverarbeitungseinrichtung zu empfangen, dass die Ist-Konfiguration mit der Soll-Konfiguration übereinstimmt, und infolge des Empfangs der Bestätigungsnachricht die zu der zentralen Datenverarbeitungseinrichtung bestehende Kommunikationsverbindung abzubrechen, ohne zuvor den finale dezentralen Hashwert an die zentrale Datenverarbeitungseinrichtung zu senden.

Bevorzugt ist die erfindungsgemäße Fahrzeugeinrichtung ausgebildet, wahlweise in einem Zustand der uneingeschränkten Betriebsbereitschaft oder in einem Zustand der eingeschränkten Betriebsbereitschaft betrieben zu werden, wobei die Fahrzeugeinrichtung im Zustand uneingeschränkter Betriebsbereitschaft ausgebildet ist, Positionsdaten zu erfassen, im Zustand eingeschränkter oder uneingeschränkter Betriebsbereitschaft erfasste Positionsdaten zu einer Streckeninformation zu verarbeiten und die Streckeninformation zusammen mit wenigstens einem Wert wenigstens eines Konfigurationsparameters an die zentrale Datenverarbeitungseinrichtung zu senden, und im Zustand eingeschränkter Betriebsbereitschaft ausgebildet ist, die Maßnahmen a) bis e) durchzuführen und Positionsdaten zu erfassen, aber keine in diesem Zustand der eingeschränkten Betriebsbereitschaft erfassten Positionsdaten zu einer Streckeninformation zu verarbeiten und/ oder keine Streckeninformation von in diesem Zustand der eingeschränkten Betriebsbereitschaft erfasster Positionsdaten an die zentrale Datenverarbeitungseinrichtung zu senden, wobei die Fahrzeugeinrichtung im Zustand der uneingeschränkten Betriebsbereitschaft ausgebildet ist, den Zustand der uneingeschränkten Betriebsbereitschaft zu signalisieren und/ oder im Zustand der eingeschränkten Betriebsbereitschaft ausgebildet ist, den Zustand der eingeschränkten Betriebsbereitschaft zu signalisieren, wobei die Fahrzeugeinrichtung im Zustand der uneingeschränkten Betriebsbereitschaft ausgebildet ist, ein Ereignis zur Auslösung einer Aktualisierungstätigkeit zu erfassen und aufgrund der Erfassung des Ereignisses in den Zustand der eingeschränkten Betriebsbereitschaft zu wechseln, und im Zustand der eingeschränkten Betriebsbereitschaft ausgebildet ist, infolge des Abbruchs der zu der zentralen Datenverarbeitungseinrichtung bestehenden Kommunikationsverbindung in den Zustand der uneingeschränkten Betriebsbereitschaft zurück zu wechseln.

Gemäß einem dritten Aspekt der Erfindung wird eine zentrale Datenverarbeitungseinrichtung bereitgestellt, in der, zugeordnet zu einer Kennung einer abseits der zentralen Datenverarbeitungseinrichtung angeordneten Fahrzeugeinrichtung, eine Soll-Konfiguration von zentralen Werten mehrerer Konfigurationsparameter dieser Fahrzeugeinrichtung gespeichert ist, wobei die zentrale Datenverarbeitungseinrichtung ausgebildet ist, im Rahmen wenigstens einer zwischen der Fahrzeugeinrichtung und der zentralen Datenverarbeitungseinrichtung bestehenden Kommunikationsverbindung (a) einen initialen dezentralen Hashwert einer in der Fahrzeugeinrichtung gespeicherten aktualisierungsbedürftigen Ist-Konfiguration von dezentralen Werten der mehreren Konfigurationsparameter von der Fahrzeugeinrichtung zu empfangen, (b) nach dem Empfang des initialen dezentralen Hashwerts i) den empfangenen initialen dezentralen Hashwert mit einem zentralen Hashwert der Soll-Konfiguration zu vergleichen und im Falle eines Unterschieds zwischen dem initialen dezentralen Hashwert und dem zentralen Hashwert ii) wenigstens einen ersten zentralen Wert eines ersten Konfigurationsparameters, der von einem ersten dezentralen Wert des ersten Konfigurationsparameters verschieden ist, in einer ersten Aktualisierungsaufforderungsnachricht an die Fahrzeugeinrichtung zu senden, (c) einen finalen dezentralen Hashwert einer den ersten zentralen Wertes des ersten Konfigurationsparameters umfassenden aktualisierten Ist-Konfiguration von Werten der mehreren Konfiguratiönsparameter von der Fahrzeugeinrichtung zu empfangen und (d) nach dem Empfang des finalen dezentralen Hashwerts eine Aktualisierungsbeendigungsnachricht an die Fahrzeugeinrichtung zu senden und/ oder eine mit der Fahrzeugeinrichtung bestehende Kommunikationsverbindung abzubrechen.

Eine solche erfindungsgemäße zentrale Datenverarbeitungseinrichtung kann darüber hinaus ausgebildet sein, im Falle einer Gleichheit des initialen dezentralen Hashwerts und des zentralen Hashwerts eine Bestätigungsnachricht darüber an die Fahrzeugeinrichtung zu senden, dass die aktualisierungsbedürftige Ist-Konfiguration der Soll-Konfiguration entspricht.

Gemäß einer Weiterbildung ist die zentrale Datenverarbeitungseinrichtung ausgebildet, zu registrieren den initialen dezentralen Hashwert mit dem finalen dezentralen Hashwert und/ oder mit wenigstens einem intermediären dezentralen Hashwert, den die Fahrzeugeinrichtung nach dem initialen dezentralen Hashwert und vor dem finalen dezentralen Hashwert an die zentrale Datenverarbeitungseinrichtung sendet, zu vergleichen und ein Fehlersignal zu erzeugen, wenn der initiale dezentrale Hashwert mit dem intermediären dezentralen Hashwert und/ oder dem finalen dezentralen Hashwert übereinstimmt.
Insbesondere kann die zentrale Datenverarbeitungseinrichtung ausgebildet sein, die Übereinstimmungen von zu verschiedenen Zeitpunkten empfangenen intermediären dezentralen Hashwerten mit dem initialen dezentralen Hashwert oder zuvor empfangenen intermediären dezentralen Hashwerten zu zählen und bei Überschreiten einer vorgegebenen Anzahl von zulässigen Übereinstimmungen das Fehlersignal zu erzeugen.
Vorzugsweise ist die zentrale Datenverarbeitungseinrichtung dieser Weiterbildung ausgebildet, infolge einer Feststellung oder mehrerer Feststellungen der Übereinstimmung des initialen dezentralen Hashwert mit dem/ den intermediären dezentralen Hashwert/ en und/ oder dem finalen dezentralen Hashwert im Rahmen der Aktualisierungsbeendigungsnachricht eine Fehlermeldung an die Fahrzeugeinrichtung zu versenden.

Gemäß einer anderen Weiterbildung ist vorgesehen, dass der erste zentrale Wert in Verknüpfung mit einer ersten Zeitangabe von Datum und optional Uhrzeit in der zentralen Datenverarbeitungseinrichtung gespeichert ist, die zentrale Datenverarbeitungseinrichtung einen zentralen Zeitgeber umfasst und die zentrale Datenverarbeitungseinrichtung ausgebildet ist, zu prüfen ob die aktuelle Zeitangabe des zentralen Zeitgebers gleich oder größer ist als die erste Zeitangabe und nur dann den ersten zentralen Wert in der ersten Aktualisierungsaufforderungsnachricht an die Fahrzeugeinrichtung zu senden, wenn die aktuelle Zeitangabe des dezentralen Zeitgebers gleich oder größer ist als die erste Zeitangabe.

Die Erfindung kommt insbesondere in einem Mautsystem mit einer erfindungsgemäßen Fahrzeugeinrichtung und einer erfindungsgemäßen zentralen Datenverarbeitungseinrichtung zum Einsatz, in dem die Fahrzeugeinrichtung ausgebildet ist, Positionsdaten zu erfassen, die erfassten Positionsdaten zu einer Streckeninformation zu verarbeiten und die Streckeninformation zusammen mit wenigstens einem dezentralen Wert wenigstens eines Konfigurationsparameters der Ist-Konfiguration an die zentrale Datenverarbeitungseinrichtung zu senden, und die zentrale Datenverarbeitungseinrichtung ausgebildet ist, in Abhängigkeit von der empfangenen Streckeninformation und dem wenigstens einen empfangenen dezentralen Wert des wenigstens einen Konfigurationsparameters der Ist-Konfiguration eine Mautgebühr zu bestimmen.

Nachfolgend wird die Erfindung anhand zweier nicht als einschränkend anzusehender Ausführungsbeispiele näher beschrieben. Dazu zeigen
- Fig. 1: eine erfindungsgemäße Fahrzeugeinrichtung des ersten und zweiten Ausführungsbeispiels,
- Fig. 2: ein erfindungsgemäßes Mautsystem des ersten und zweiten Ausführungsbeispiels,
- Fig. 3a: ein Signalflussdiagramm der Nachrichten, die in einem erfindungsgemäßen Verfahren des ersten Ausführungsbeispiels gesendet und empfangen werden und
- Fig. 3b: ein Signalflussdiagramm der Nachrichten, die in einem erfindungsgemäßen Verfahren des zweiten Ausführungsbeispiels gesendet und empfangen werden.

Gleiche oder gleich wirkende Komponenten verschiedener Figuren sind mit denselben Bezugszeichen versehen.

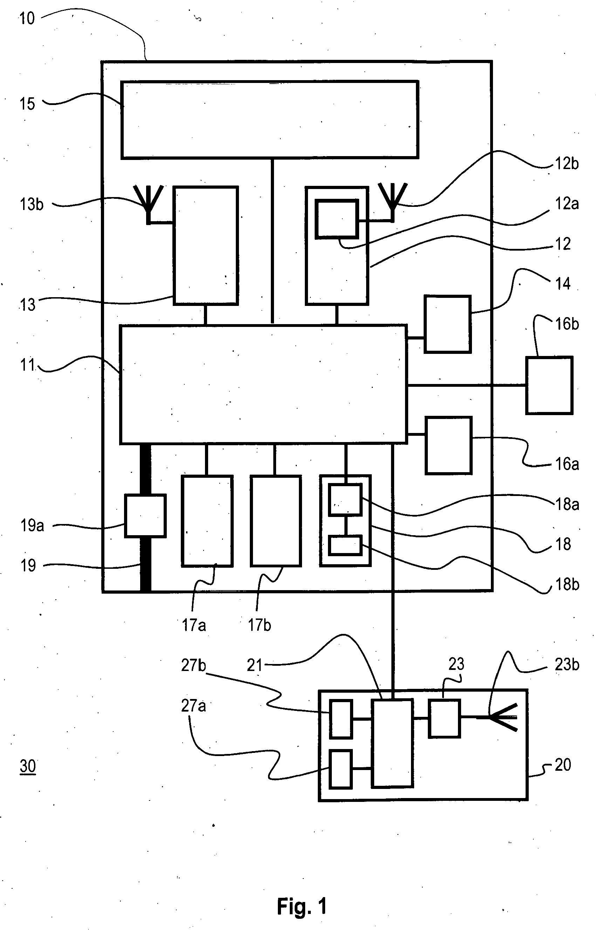

Fig. 1 zeigt schematisch eine vom Aufbau, jedoch nicht von der Ausbildung, her im ersten und zweiten Ausführungsbeispiel identische Ausführungsform einer Fahrzeugeinrichtung 30 vom selbstverortenden Typ, die ein Fahrzeuggerät 10 mit einem Fahrzeuggerät-Prozessor 11 sowie ein DSRC-Kommunikationsmodul 20 zur DSRC-Kommunikation (DSRC = dedicated short range communication) und einen Weggeber 16b (beispielsweise ein Kilometerzähler, ein Hodometer, ein Weglängenmesser oder ein Wegstreckenzähler) umfasst, die mit dem Fahrzeuggerät 10 datentechnisch gekoppelt sind. Datentechnische Kopplungen zwischen datentechnisch miteinander gekoppelten Komponenten sind in Fig. 1 durch durchgängige Verbindungsstriche zwischen den gekoppelten Komponenten verdeutlicht. Sie können durch Schnittstellen, Verbindungsleitungen oder Drahtlos-Kommunikationsmittel (z. B. bluetooth) realisiert sein. Der Fahrzeuggerät-Prozessor 11 ist durch die Ausführung eines Computerprogramms, das zur Ausführung aus dem Daten-Schreib-Lese-Speicher 17a in den Arbeitsspeicher 17b geladen wird, ausgebildet, Daten an den DSRC-Kommunikationsmodul-Prozessor 21 des DSRC-Kommunikationsmoduls 20 zu senden und von ihm Daten zu empfangen. Entsprechend ist der DSRC-Kommunikationsmodul-Prozessor 21 durch die Ausführung eines im DSRC-Kommunikationsmodul-Daten-Schreib-Lese-Speicher 27a gespeicherten Computerprogramms ausgebildet, Daten von dem Fahrzeuggerät-Prozessor 11 zu empfangen und an diesen zu senden.

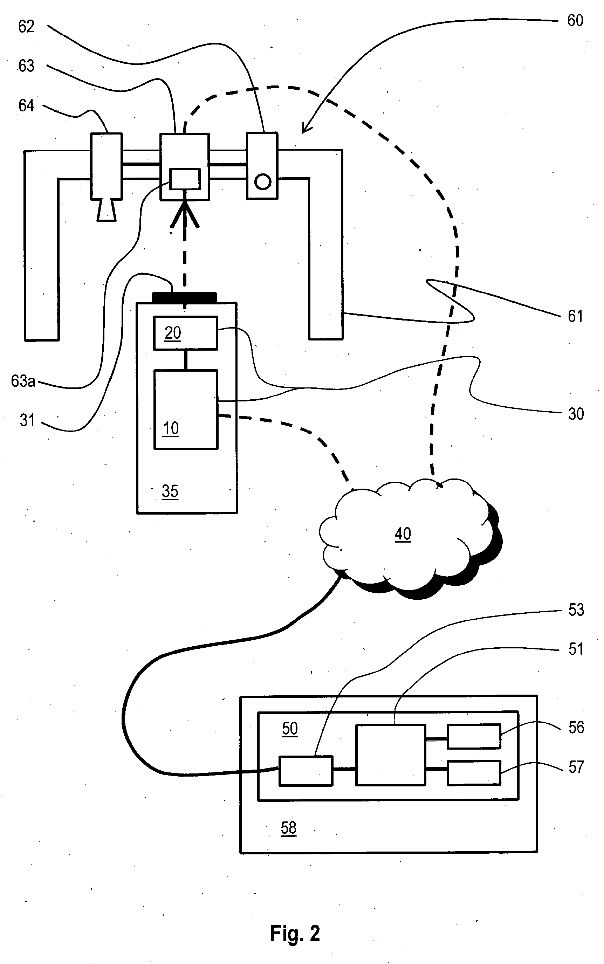

Eine GNSS-Positionsbestimmungseinrichtung 12 empfängt mittels ihrer GNSS-Empfangsantenne 12b Signale von nicht dargestellten Satelliten eines Globalen Navigationssatellitensystems (GNSS), beispielsweise GPS, und ermittelt aus den empfangenen Satellitensignalen mittels ihres GNSS-Empfängers 12a ihre vorläufige Position - und damit die vorläufige Position eines Fahrzeugs 35 (siehe Fig. 2), von dem die Fahrzeugeinrichtung 30 mitgeführt wird. Die ermittelte vorläufige Position wird durch den Prozessor 11 anhand von Fahrtrichtungsänderungswerten, die von einem Gyroskop 16a des Fahrzeuggerätes bereitgestellt werden, und anhand von relativen Weglängenwerten eines in einem bestimmten Zeitrahmen zurückgelegten Weges, die von dem Weggeber 16b bereitgestellt werden, weiter zu einer gegenüber der vorläufigen Position genaueren endgültigen Position (im folgenden nur noch als "Position" bezeichnet) im Zuge eines als Koppelortung an sich bekannten Verfahrens verarbeitet.
In einer alternativen Ausführungsvariante können die Signale des Gyroskops 16a und des Weggebers 16b anstatt auf den Prozessor 11 auf die GNSS-Positionsbestimmungseinrichtung 12 geleitet werden, wobei die die GNSS-Positionsbestimmungseinrichtung 12 die Koppelortung durchführt und die koppelgeortete Position dem Fahrzeuggerät-Prozessor 11 bereitstellt.
Die Positionsbestimmung durch den Prozessor 11 und/ oder die GNSS-Positionsbestimmungseinrichtung 12 erfolgt wiederholt - beispielsweise im Sekundentakt - insbesondere im Laufe der Fortbewegung des Fahrzeugs 35 durch die Fahrzeugeinrichtung 30.
Alternativ oder kumulativ kann eine Positionsbestimmung durch den Prozessor 11 in an sich bekannter Weise anhand des Spektrums von Zellkennungen erfolgen, die ein von dem Fahrzeuggerät 10 umfasster Mobilfunk-Sendeempfänger 13 mittels seiner Mobilfunk-Antenne von den Basisstationen eines Mobilfunknetzes empfängt. Dennoch ist eine Positionsbestimmung mittels der GNSS-Positionsbestimmungseinrichtung 12 aus Gründen der Positionsgenauigkeit bevorzugt.

Der Fahrzeuggerät-Prozessor 11 ist an ein Sicherheitsmodul 18 gekoppelt, das als eigenständige Datenverarbeitungseinheit (beispielsweise als eine sogenannte Chipkarte) ausgebildet ist, die wenigstens ein autonomes Steuermodul 18a und einen Speicherbereich 18b aufweist, wobei das autonome Steuermodul 18a dazu konfiguriert ist, Anfragen nach einer Herausgabe von Daten aus dem Speicherbereich 18b und/ oder der Änderung oder Aufnahme von Daten im Speicherbereich 18b nur gegen eine Authentifizierung auszuführen. Die Durchführung der Authentifizierungsprozedur kann durch die Analyse einer digitalen Signatur mittels eines vom Signierenden im Speicherbereich 18b des Sicherheitsmoduls 18 abgelegten öffentlichen Schlüssels erfolgen.
Anstelle des Sicherheitsmoduls 18 kann ein kryptographischer Datenspeicher (nicht dargestellt) vorgesehen sein, in den der Prozessor 11 Daten nur mit entsprechender Authentifizierung verschlüsselt ablegen kann und entschlüsselnd auslesen kann.
Das Fahrzeuggerät 10 weist zur Stromversorgung eine Batterie 19a, insbesondere ein wiederaufladbare Batterie (z. B. ein Akkumulator) auf, sowie einen Stromanschluss 19, über den sowohl das Fahrzeuggerät 10 alternativ zur Batterie 19a mit Strom des Fahrzeug-Bordnetzes versorgt werden kann. Ist die Batterie 19a als Akkumulator ausgebildet, so kann dieser über den Stromanschluss 19 wieder aufgeladen werden. Über die Schnittstelle zwischen dem Fahrzeuggerät 10 und dem DSRC-Kommunikationsmodul 20 wird auch das DSRC-Kommunikationsmodul 20 mit Strom versorgt.

Eine Fahrzeugkennung des Fahrzeugs 35 ist in Form des Fahrzeugkennzeichens, das von wenigstens einem Fahrzeugkennzeichenschild 31 (siehe Fig. 2) des Fahrzeugs 35 umfasst ist, im Speicherbereich 18b des

Sicherheitsmoduls 18 oder kryptographischen Datenspeichers gespeichert. Alternativ oder optional kann die Fahrzeugkennung in dem Daten-Schreib-Lese-Speicher 17a gespeichert sein.
Des Weiteren sind eine Gewichtsklasse (oder: zulässiges Gesamtgewicht), eine Achsklasse (oder: Achszahl) und eine Schadstoffklasse, deren Kombination eine Fahrzeugklasse bildet, in dem Speicherbereich 18b des Sicherheitsmoduls 18 gespeichert. Zusammen mit der Fahrzeugkennung bilden diese Daten einen Satz von Fahrzeugdaten, die als dezentrale Werte von Konfigurationsparametern Teil der Ist-Konfiguration der Fahrzeugeinrichtung 30 sind.
Eine Erstregistrierung oder Änderung der Konfigurationsparameter Fahrzeugkennung, Gewichtsklasse (oder: zulässiges Gesamtgewicht), Achsklasse (oder: Achszahl) und/ oder Schadstoffklasse wird durch den Nutzer bewirkt, indem er zunächst die entsprechenden Werte der Konfigurationsparameter über eine nicht dargestellte dezentrale Datenverarbeitungseinrichtung (beispielsweis einen Personal-Computer oder ein Smartphone) an die zentrale Datenverarbeitungseinrichtung 50 (siehe Fig. 2) übermittelt oder in der zentralen Datenverarbeitungseinrichtung 50 auswählt (Bereitstellung externer Daten externer Konfigurationsparameter). Ferner können bestimmte Konfigurationsparameter durch den Mautbetreiber selbst in der zentralen Datenverarbeitungseinrichtung 50 eingegeben werden. Derartige interne Konfigurationsparameter sind beispielsweise die Versionsnummer einer Software der Fahrzeugeinrichtung 30, des Dienststatus eines durch die Fahrzeugeinrichtung ausführbaren Dienstes (Dienst gesperrt oder Dienst entsperrt), beispielsweise eines Mautdienstes für Deutschland (Dienst DE) oder eines Mautdienstes für Österreich (Dienst AT), einen Mauterhebungsmodus (dezentral oder zentral), die Sendehäufigkeit einer initialen Statusnachricht und so weiter. Damit sind die Werte der Konfigurationsparameter zunächst als zentrale Werte einer Soll-Konfiguration der Fahrzeugeinrichtung 30 in der zentralen Datenverarbeitungseinrichtung 50, zugeordnet zu einer Kennung der Fahrzeugeinrichtung 30, gespeichert. Diese Fahrzeugeinrichtungskennung kann eine Seriennummer oder eine Mobilfunknummer eines Mobilfunk-Sendeempfängers 13 der Fahrzeugeinrichtung 30 sein.
Im Zuge des weiter unten beschriebenen erfindungsgemäßen Verfahrens zur Aktualisierung der Ist-Konfiguration der Fahrzeugeinrichtung werden dann die Fahrzeugdaten von der zentralen Datenverarbeitungseinrichtung 50 über das Mobilfunknetz 40 (siehe Fig. 2) an die Fahrzeugeinrichtung 30 übertragen, welche die Fahrzeugdaten mittels eines Mobilfunk-Sendeempfängers 13 über die Mobilfunk-Antenne 13b empfängt und mittels des Fahrzeuggerät-Prozessors 11 verarbeitet, und als dezentrale Werte der Ist-Konfiguration in der Fahrzeugeinrichtung 30 speichert.
Vor der Erstregistrierung sind alle dezentralen Werte der externen und internen Konfigurationsparameter der Ist-Konfiguration jeweils in Form eines allgemein voreingestellten Wertes (beispielsweise in Form eines Nullwertes, der keinem üblichen Wert des jeweiligen Konfigurationsparameters entspricht) in der Fahrzeugeinrichtung gespeichert. Im Zuge der Erstregistrierung werden alle voreingestellten dezentralen Werte in der Fahrzeugeinrichtung durch die vom Nutzer übermittelten und die vom Mautbetreiber eingegebenen zentralen Werte überschrieben, nachdem sie von der zentralen Datenverarbeitungseinrichtung 50 an die Fahrzeugeinrichtung 30 übertragen wurden.
Dabei werden die zentralen Werte der zentralen Datenverarbeitungseinrichtung 50 durch die Übertragung an die Fahrzeugeinrichtung 30 zu dezentralen Werten in der Fahrzeugeinrichtung 30.

Die Speicherung der dezentralen Werte der externen Konfigurationsparameter der Fahrzeugkennung, der Gewichtsklasse (oder: zulässiges Gesamtgewicht), der Achsklasse (oder: Achszahl) und der Schadstoffklasse sowie der Werte internen Konfigurationsparameter erfolgt vorzugsweise verschlüsselt im Speicherbereich 18b des Sicherheitsmoduls 18 oder im kryptographischen Datenspeicher und kann mittels entsprechender Anweisungen durch den Fahrzeuggerät-Prozessor 11 veranlasst werden. Diese in der Fahrzeugeinrichtung 30 gespeicherten dezentralen Werte werden im Folgenden auch als registrierte Werte oder Werte registrierter Konfigurationsparameter bezeichnet, um sie von Werten vergleichbarer (z. B. ermittelter) Konfigurationsparameter abzugrenzen, die außerhalb der Fahrzeugeinrichtung 30 vorliegen, beispielsweise in der Kontrolleinrichtung 60 (Fig. 20), nachdem sie - soweit möglich und zutreffend - durch die Kontrolleinrichtung 60 ermittelt wurden.
Nach der erfolgten Speicherung dieser dezentralen Werte im Sicherheitsmodul 18 übermittelt der Fahrzeuggerät-Prozessor 11 diese an das DSRC-Kommunikationsmodul 20, dessen DSRC-Kommunikationsmodul-Prozessor 21 die Fahrzeugdaten empfängt und sie in einem DSRC-Kommunikationsmodul-Arbeitsspeicher 27b speichert. Beispielsweise kann diese Übermittlung im Minutentakt weiderholt werden. Damit ist die Ist-Konfiguration zumindest minutenaktuell in dem DSRC-Kommunikationsmodul gespeichert. Alternativ oder kumulativ können die Fahrzeugdaten auch im DSRC-Kommunikationsmodul-Daten-Schreib-Lese-Speicher 27a gespeichert werden.

Das DSRC-Kommunikationsmodul 20 ist beabstandet von dem Fahrzeuggerät 10 an der Innenseite der Frontscheibe des Fahrzeugs 35 so befestigt, dass der DSRC-Sendeempfänger 23 mittels seiner DSRC-Sende- und Empfangsmittel 23b mit einer außerhalb des Fahrzeugs 35 angeordneten straßenseitigen DSRC-Kommunikationseinrichtung 63a eines Kontrollgerätes 63 einer straßenseitigen Einrichtung 60 (siehe Fig. 2) einer kommunizieren kann. Ein DSRC-Kommunikationsträger ist Mikrowelle im Frequenzbereich von 5,8 GHz. Alternativ oder kumulativ ist als DSRC-Kommunikationsträger Infrarotlicht (z. B. 850 nm) möglich. Insbesondere kann das DSRC-Sende- und Empfangsmittel 23b mehrteilig ausgebildet sein und ein Sendemittel (Sendeantenne im Falle von Mikrowellen-DSRC-Kommunikation, IR-Leuchtdiode (IR-LED) im Falle einer Infrarot-DSRC-Kommunikation) und ein Empfangsmittel (Empfangsantenne im Falle von Mikrowellen-DSRC-Kommunikation, IR-Photodiode (IR-PD) im Falle einer Infrarot-DSRC-Kommunikation) umfassen.

Insbesondere kann die Fahrzeugeinrichtung 30 alternativ die Komponenten des Fahrzeuggerätes 10 und des DSRC-Kommunikationsmoduls 20 umfassen und als solche an der Innenseite der Frontscheibe des Fahrzeugs 35 befestigt sein.

Die weitere Beschreibung des Betriebs der erfindungsgemäßen Fahrzeugeinrichtung 20 in einem erfindungsgemäßen Mautsystem wird zusätzlich anhand von Fig. 2 beschrieben.

Das Mautsystem umfasst neben der durch das Fahrzeuggerät 10 und das DSRC-Kommunikationsmodul 20 gebildeten Fahrzeugeinrichtung 30, die von einem Fahrzeug 35 mitgeführt wird, eine zentrale Datenverarbeitungseinrichtung 50, die von einer Zentrale 58 des Mautsystems umfasst ist, und wenigstens eine Kontrolleinrichtung 60.

Der Prozessor 11 des Fahrzeuggeräts 10 der Fahrzeugeinrichtung 30 erfasst-wie bereits erwähnt - im Sekundentakt eine Position des Fahrzeugs 40 und verarbeitet die erfassten Positionsdaten dieser Positionen zum Zwecke der Erhebung einer auf das Fahrzeug bezogenen Mautgebühr, die für die Nutzung eines Streckenabschnitts durch das Fahrzeug 30 zu erheben ist, die anhand der erfassten Positionsdaten identifizierbar ist.
Im Zuge einer dezentralen Mautgebührenermittlung vergleicht der Fahrzeuggerät-Prozessor 11 im Modus der dezentralen Mauterhebung mittels eines im Arbeitsspeicher 17b ausgeführten Mautgebührenermittlungsprogramms Positionsdaten einer oder mehrerer erfasster Positionen mit geographischen Elementen (sogenannten Maut-Geo-Objekten) einer digitalen Karte, denen jeweils eine Kennung eines Streckenabschnittes zugeordnet ist. Bei hinreichender geographischer Übereinstimmung der erfassten Positionsdaten mit einem bestimmten geographischen Element, wird der Streckenabschnitt, dessen Kennung mit dem bestimmten geographischen Element verknüpft ist, als befahren erkannt. Anschließend ermittelt der Fahrzeuggerät-Prozessor 11 anhand der Kennung des als befahren erkannten Streckenabschnittes eine Mautgebühr, die von der Gewichtsklasse (oder: zulässiges Gesamtgewicht), der Achsklasse (oder: Achszahl) und der Schadstoffklasse des Fahrzeugs 30 abhängt.
Insofern sind Gewichtsklasse (oder: zulässiges Gesamtgewicht), Achsklasse (oder: Achszahl) und Schadstoffklasse mautrelevante Daten der Fahrzeugeinrichtung, weil sie die Höhe der Mautgebühr bestimmen und insofern die Verarbeitung der Positionsdaten zu einer auf das Fahrzeug bezogenen Mautgebühr beeinflussen.
Anschließend weist der zentrale Prozessor 11 den Mobilfunk-Sendeempfänger 13 an, die ermittelte Mautgebühr zusammen mit der Fahrzeugkennung über ein Mobilfunknetz 40 an die außerhalb und abseits des Fahrzeugs 35 angeordnete zentrale Datenverarbeitungseinrichtung 50 des Mautsystems zu versenden.
Die zentrale Datenverarbeitungseinrichtung 50 weist eine zentrale Kommunikationseinrichtung 53, einen zentralen Prozessor 51, einen ersten zentralen Datenspeicher 56 und einen zweiten zentralen Datenspeicher 57 auf. Beispielsweise ist die zentrale Kommunikationseinrichtung 53 eine Netzwerkkarte (Netzwerkadapter, network interface card), die die Schnittstelle zwischen dem öffentlichen Telefonnetz, Mobilfunknetz 40 und/ oder dem Internet und dem von der zentralen Datenverarbeitungseinrichtung 50 umfassten zentralen Prozessor 51 ist.
Der erste zentrale Datenspeicher 56 umfasst Nutzerdaten verknüpft mit der Fahrzeugkennung des Fahrzeugs 35 (Fahrzeugkennzeichen), mit einem Nutzerkonto mit Mautgebühren zugeordnet zu Kennungen von mautpflichtigen Streckenabschnitten, welche von der Fahrzeugeinrichtung 20 zusammen mit dem Fahrzeugkennzeichen jeweils nach der Erkennung der Befahrung wenigstens eines mautpflichtigen Streckenabschnitts an die zentrale Datenverarbeitungseinrichtung gesendet wurden.
Der zweite zentrale Datenspeicher 57 ist vorgesehen für die Speicherung von zentralen Werten der Konfigurationsparameter der Fahrzeugeinrichtungen 30, und zwar jeweils verknüpft mit einer Kennung der jeweiligen Fahrzeugeinrichtung 30.
Die zentrale Datenverarbeitungseinrichtung 50 ordnet die Mautgebühr anhand der Fahrzeugkennung dem besagten Nutzerkonto zu, von dem die Mautgebühr durch eine Datenverarbeitungseinrichtung einer Bank (nicht dargestellt) abgezogen dem Konto des Mautbetreibers gutgeschrieben wird.
Alternativ oder kumulativ zu der dezentralen Mautgebührenermittlung durch die Fahrzeugeinrichtung 30 ist eine zentrale Mautgebührenermittlung möglich, zu der die Fahrzeugeinrichtung 30 in einem Modus der zentralen Mauterhebung die erfassten Positionen zusammen mit den Fahrzeugdaten mittels des Mobilfunk-Sendeempfängers 13 an eine nicht dargestellte, von dem Fahrzeug 40 beabstandete zentrale Datenverarbeitungseinrichtung übermittelt, die in gleicher oder ähnlicher Weise wie im Falle der beschriebenen dezentralen Mautgebührenermittlung die Mautgebühr ermittelt.

Die Fahrzeugeinrichtung 30 ist ausgebildet, wahlweise entweder im Modus der dezentralen Mauterhebung oder im Modus der zentralen Mauterhebung betrieben zu werden. Im Modus der dezentralen Mauterhebung ist die Fahrzeugeinrichtung 30 ausgebildet, aus erfassten Positionsdaten wenigstens eine Streckeninformation in Form von wenigstens einem befahrenen Streckenabschnitten zu bestimmen und den wenigstens einen bestimmten Streckenabschnitte an die zentrale Datenverarbeitungseinrichtung 50 zu senden. Im Modus der zentralen Mauterhebung ist die Fahrzeugeinrichtung 30 ausgebildet, aus erfassten Positionsdaten wenigstens eine Streckeninformation in Form wenigstens einer Trajektorie von mehreren Positionen zu bestimmen, die den Fahrweg des Fahrzeugs 35 zumindest abschnittsweise repräsentieren, und diese wenigstens eine Trajektorie an die zentrale Datenverarbeitungseinrichtung 50 zu senden.

Insbesondere sendet dabei die Fahrzeugeinrichtung 30 sowohl im Modus der zentralen Mauterhebung als auch im Modus der dezentralen Mauterhebung die Streckeninformation zusammen mit wenigstens den dezentralen Werten der externen Konfigurationsparameter an die zentrale Datenverarbeitungseinrichtung 50, die die zentrale Datenverarbeitungseinrichtung 50 zum einen benötigt, um die Höhe der Mautgebühr zu berechnen und zum anderen, um die Mautgebühr einem Nutzerkonto zuzuordnen.
Die Fahrzeugeinrichtung 30 ist ausgebildet, den zentralen Wert des Konfigurationsparameters des Mauterhebungsmodus der Soll-Konfiguration im Rahmen einer Aktualisierungsaufforderungsnachricht von der zentralen Datenverarbeitungseinrichtung 50 zu empfangen und seinen dezentralen Wert des Konfigurationsparameters des Mauterhebungsmodus der Ist-Konfiguration durch den empfangenen zentralen Wert des Konfigurationsparameters des Mauterhebungsmodus der Soll-Konfiguration zu ersetzen, in der Weise, dass ein neuer dezentraler Wert des Konfigurationsparameters des Mauterhebungsmodus der Ist-Konfiguration geschaffen wird, der dem zentralen Wert des Konfigurationsparameters des Mauterhebungsmodus der Soll-Konfiguration entspricht.
Ist dabei der neue dezentrale Wert von dem alten dezentralen Wert verschieden, der durch den neuen dezentralen Wert ersetzt wurde, so wechselt die Fahrzeugeinrichtung von dem zentralen Mauterhebungsmodus in den dezentralen Mauterhebungsmodus, wenn der alte dezentrale Wert "zentral" lautete und der neue dezentrale Wert "dezentral" lautet oder von dem dezentralen Mauterhebungsmodus in den zentralen Mauterhebungsmodus, wenn der alte dezentrale Wert "dezentral" lautete und der neue dezentrale Wert "zentral" lautet.

Im Zuge seiner Fahrt auf mautpflichtigen Streckenabschnitten gelangt das Fahrzeug 30 an die Kontrolleinrichtung 60 des Mautsystems, die es ohne anzuhalten passiert. Die Kontrolleinrichtung 60 weist eine Kontrollbrücke 61 auf, die den mautpflichtigen Streckabschnitt quer zur Fahrtrichtung überspannt, so dass das Fahrzeug 30 unter ihr hindurchfahren kann. Oberhalb des mautpflichtigen Streckenabschnitts sind an der Kontrollbrücke 61 ein Kontrollgerät 63 mit einer straßenseitigen DSRC-Kommunikationseinrichtung 63a, eine Bildaufnahmeeinrichtung 62 und eine Fahrzeugkontur-Erfassungseinrichtung 64 befestigt.
Die Bildaufnahmeeinrichtung 62 ist ausgebildet, ein Bild vom dem Fahrzeug 35 einschließlich des vorderseitigen Fahrzeugkennzeichenschildes 31 des Fahrzeugs 35 aufzunehmen, aus den Bilddaten des somit vom dem vorderseitigen Fahrzeugkennzeichenschildes 31 des Fahrzeugs 35 aufgenommen Bildes mittels einer Zeichenerkennungsroutine die Zeichen des von dem Fahrzeugkennzeichenschild 31 wiedergegebenen Fahrzeugkennzeichens zu bestimmen und das somit bestimmte Fahrzeugkennzeichen dem Kontrollgerät 63 bereitzustellen.
Die Fahrzeugkonturerfassungseinrichtung 64 ist ausgebildet, die Kontur des Fahrzeugs 35 zu erfassen und mittels einer Klassifizierungseinrichtung (nicht dargestellt) aus der erfassten Kontur die Gewichtsklasse (oder: zulässiges Gesamtgewicht) des Fahrzeugs 35 und die Achsklasse (oder: Achszahl) des Fahrzeugs 35 zu bestimmen. Dem Fachmann geläufige Beispiele für Mittel zur Fahrzeugkonturerfassung, die von der Fahrzeugkontur-Erfassungseinrichtung 64 umfasst sind, sind: ein Radar, ein LIDAR, eine time-of-flight-Kamera (TOF-Kamera), eine Stereokamera-Anordnung, ein Lichtschnitt-Sensor mit strukturierter Beleuchtung/ Beschattung des Fahrzeugs.
Die straßenseitige DSRC-Kommunikationseinrichtung 63 ist ausgebildet, wenigstens ein Abfragesignal auszusenden, das von dem fahrzeugseitigen DSRC-Kommunikationsmodul 20 empfangen wird, wenn sich das Fahrzeug 35 der Kontrolleinrichtung 60 nähert.
Das fahrzeugseitige DSRC-Kommunikationsmodul 20 ist ausgebildet, in Antwort auf den Empfang eines Abfragesignals ein Informationssignal an die straßenseitige DSRC-Kommunikationseinrichtung 63a zu senden, welches zumindest die dezentralen Werte der folgenden externen Konfigurationsparameter der in der Fahrzeugeinrichtung 30 gespeicherten Ist-Konfiguration der Fahrzeugeinrichtung 30 enthält: das registrierte Fahrzeugkennzeichen, die registrierte Gewichtsklasse (oder: zulässiges Gesamtgewicht) und die registrierte Achsklasse (oder: Achszahl) des Fahrzeugs.
Dazu ist der Prozessor 11 des Fahrzeuggeräts 10 ausgebildet, die dezentralen Werte der externen Konfigurationsparameter dem DSRC-Kommunikationsmodul 20 zur Verfügung zu stellen, zum Beispiel in der Weise, in der sie weiter oben bereits beschrieben wurde. Der DSRC-Kommunikationsmodul-Prozessor 22c stellt die angeforderten dezentralen Werte der externen Konfigurationsparameter durch Zugriff auf den DSRC-Kommunikationsmodul-Daten-Schreib-Lese-Speicher 22d dem fahrzeugseitigen DSRC-Sendeempfänger 22a zum Versand bereit, der den Auszug mittels der DSRC-Antenne 22b an die straßenseitigen DSRC-Kommunikationseinrichtung 63a versendet.
Das Kontrollgerät 63 ist ausgebildet, die angeforderten dezentralen Werte der externen Konfigurationsparameter mittels der straßenseitigen DSRC-Kommunikationseinrichtung 63a ebenso zu empfangen, wie den von der Bildaufnahmeeinrichtung 62 ermittelte Fahrzeugkennzeichen des Fahrzeugs 35 und die von der Fahrzeugkontur-Erfassungseinrichtung 64 ermittelte Gewichtsklasse (oder: zulässiges Gesamtgewicht) und Achsklasse (oder: Achszahl) des Fahrzeugs 35, und jeden Empfang mit einem Empfangszeitpunkt zu registrieren.
Über die Empfangszeitpunkte der angeforderten dezentralen Werte der externen Konfigurationsparameter der Fahrzeugeinrichtung 30 sowie der Bildaufnahme und Fahrzeugkonturerfassung des Fahrzeugs 35 der Information ordnet das Kontrollgerät 63 den Wert des ermittelten Fahrzeugkennzeichens dem Wert des registrierten Fahrzeugkennzeichens, den Wert der ermittelten Gewichtsklasse (oder: zulässiges Gesamtgewicht) dem Wert der registrierten Gewichtsklasse (oder: zulässiges Gesamtgewicht) und den Wert der erfassten Achsklasse (oder: Achszahl) dem Wert der registrierten Achsklasse (oder: Achszahl) zu.
Das Kontrollgerät 63 ist ausgebildet, den von der Fahrzeugeinrichtung 30 versendeten Wert des registrierten Fahrzeugkennzeichens auf Übereinstimmung mit dem von der Bildaufnahmeeinrichtung 62 ermittelten Wert des ermittelten Fahrzeugkennzeichens zu prüfen und im Falle mangelnder Übereinstimmung eine Problem-Nachricht über die mangelnde Übereinstimmung des ermittelten mit dem registrierten Fahrzeugkennzeichen des Fahrzeugs 35 an die zentrale Datenverarbeitungseinrichtung 50 zu senden, beispielsweise über das Mobilfunknetz 40.
Ferner ist das Kontrollgerät 63 ausgebildet, den von der Fahrzeugeinrichtung 20 versendeten Wert der registrierten Gewichtsklasse (oder: zulässiges Gesamtgewicht) auf Übereinstimmung mit dem von der Fahrzeugkontur-Erfassungseinrichtung 64 ermittelten Wert der ermittelten Gewichtsklasse (oder: zulässiges Gesamtgewicht) zu prüfen und im Falle mangelnder Übereinstimmung eine Problem-Nachricht über die mangelnde Übereinstimmung der erfassten mit der registrierten Gewichtsklasse (oder: zulässiges Gesamtgewicht) des Fahrzeugs 20 an die zentrale Datenverarbeitungseinrichtung zu senden, beispielsweise über das Mobilfunknetz 40.
Schließlich ist das Kontrollgerät 63 ausgebildet, den von der Fahrzeugeinrichtung 20 versendeten Wert der registrierten Achsklasse (oder: Achszahl) auf Übereinstimmung mit dem von der Fahrzeugkontur-Erfassungseinrichtung 64 ermittelten Wert der ermittelten Achsklasse (oder: Achszahl) zu prüfen und im Falle mangelnder Übereinstimmung eine Problem-Nachricht über die mangelnde Übereinstimmung der erfassten mit der registrierten Achsklasse (oder: Achszahl) des Fahrzeugs 20 an die zentrale Datenverarbeitungseinrichtung zu senden, beispielsweise über das Mobilfunknetz 40.

Die Fahrzeugeinrichtung 30 ist im ersten Ausführungsbeispiel ausgebildet, die Schritte des erfindungsgemäßen Verfahrens gemäß dem ersten Ausführungsbeispiel durchzuführen, und im zweiten Ausführungsbeispiels ausgebildet, die Schritte des erfindungsgemäßen Verfahrens gemäß dem zweiten Ausführungsbeispiel durchzuführen.

### ERSTES AUSFÜHRUNGSBEISPIEL

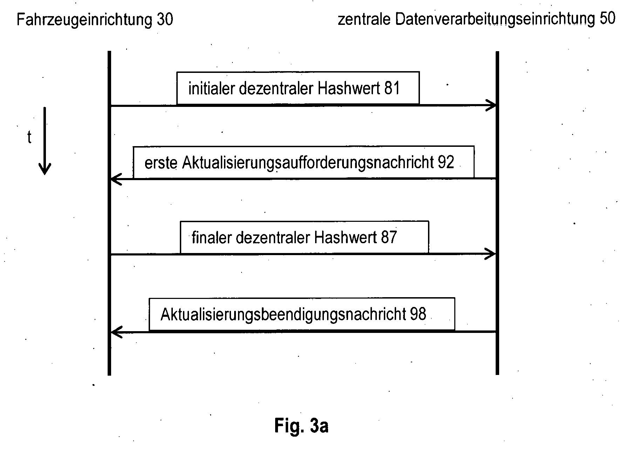

Während des Betriebs der Fahrzeugeinrichtung 30 (Fig. 1) ist der dezentrale Prozessor 11 (Fig. 1) des Fahrzeuggeräts 10 - und damit die Fahrzeugeinrichtung 30 - in einer Aktualisierungsbereitschaftsphase in einem Zustand uneingeschränkter Betriebsbereitschaft ausgebildet, Positionsdaten zu erfassen, zumindest die im Zustand der uneingeschränkten Betriebsbereitschaft erfassten Positionsdaten zu einer Streckeninformation zu verarbeiten und diese Streckeninformation zusammen mit wenigstens einem Wert wenigstens eines Konfigurationsparameters an die zentrale Datenverarbeitungseinrichtung zu senden, wobei eine aktualisierungsbedürftige Ist-Konfiguration von dezentralen Werten mehrerer Konfigurationsparameter einer Ist-Konfiguration auf in der Fahrzeugeinrichtung 30 gespeichert ist, beispielsweise in dem Speicherbereich des Sicherheitsmoduls 18 des Fahrzeuggerätes 10.
Die Fahrzeugeinrichtung 30 ist ausgebildet, die Zeit mittels des als Funkuhr 14 ausgebildeten Zeitgebers zu erfassen.
In der Fahrzeugeinrichtung 30 ist der letzte Aktualisierungszeitpunkt der zuletzt erfolgten Speicherung eines dezentralen Wertes eines Konfigurationsparameters der aktualisierungsbedürftigen Ist-Konfiguration gespeichert. Alternativ ist in der Fahrzeugeinrichtung 30 der letzte Auslösezeitpunkt des zuletzt erfassten Ereignisses zur Auslösung der letzten Aktualisierungstätigkeit gespeichert.
Die Fahrzeugeinrichtung 30 ist im Zustand der uneingeschränkten Betriebsbereitschaft ausgebildet, den Zustand der uneingeschränkten Betriebsbereitschaft zu signalisieren, beispielsweise durch eine grün leuchtende Leuchtdiode (nicht dargestellt) der Fahrzeugeinrichtung 30.
Die Fahrzeugeinrichtung 30 ist im Zustand der uneingeschränkten Betriebsbereitschaft ausgebildet, ein Ereignis zur Auslösung einer Aktualisierungstätigkeit zu erfassen und aufgrund der Erfassung des Ereignisses in den Zustand einer eingeschränkten Betriebsbereitschaft zu wechseln. Das Ereignis zur Auslösung ist das Ablaufen einer vorgegebenen Zeitdauer seit dem letzten Aktualisierungszeitpunkt oder seit dem letzten Auslösezeitpunkt. Die vorgegebene Zeitdauer entspricht einer Aktualisierungsperiode von einer Stunde. Die Fahrzeugeinrichtung 30 kann ausgebildet sein, einen Zeitabschnitt oder mehrere Zeitabschnitte, in dem/ denen die Fahrzeugeinrichtung nicht in Betrieb war, von der gemessenen Zeitdauer abzuziehen, wobei die Differenz zwischen der gemessenen Zeitdauer und dem/ den abzuziehenden Zeitabschnitten als abgelaufene Zeitdauer durch die Fahrzeugeinrichtung 30 bestimmt wird, die die Fahrzeugeinrichtung 30 mit der vorgegebenen Zeitdauer vergleicht.
Infolge der Erfassung eines Ereignisses zur Auslösung einer Aktualisierungstätigkeit in der Fahrzeugeinrichtung 30 wechselt die Fahrzeugeinrichtung aus dem Zustand der uneingeschränkten Betriebsbereitschaft in den Zustand der eingeschränkten Betriebsbereitschaft., in dem die Fahrzeugeinrichtung 30 zwar ausgebildet ist, weiterhin Positionsdaten zu erfassen und die im Zustand eingeschränkter und/ oder uneingeschränkter Betriebsbereitschaft erfassten Positionsdaten zu einer Streckeninformation zu verarbeiten, jedoch keine Streckeninformation von im diesem Zustand der eingeschränkten Betriebsbereitschaft erfasster Positionsdaten an die zentrale Datenverarbeitungseinrichtung zu senden. Die Fahrzeugeinrichtung ist 30 im Zustand der eingeschränkten Betriebsbereitschaft ausgebildet, den Zustand der eingeschränkten Betriebsbereitschaft zu signalisieren, beispielsweise durch eine gelb leuchtende Leuchtdiode (nicht dargestellt) der Fahrzeugeinrichtung 30.
Ferner ist die Fahrzeugeinrichtung ist 30 unter Verweis auf Fig. 3a im Zustand der eingeschränkten Betriebsbereitschaft ausgebildet, in einer Aktualisierungstätigkeitsphase folgende Schritte durchzuführen: den Aufbau einer initialen Kommunikationsverbindung mittels ihres Mobilfunk-Sendeempfängers 13 über das Mobilfunknetz 40zu der zentralen Datenverarbeitungseinrichtung zu initiieren; einen initialen dezentralen Hashwert 81 eines dezentralen Konfigurationsdatensatzes, der die dezentralen Werte der Konfigurationsparameter der aktualisierungsbedürftigen Ist-Konfiguration umfasst, durch Anwendung einer Hashfunktion auf den dezentralen Konfigurationsdatensatz zu erzeugen; den erzeugten initialen dezentralen Hashwert 81 mittels ihres Mobilfunk-Sendeempfängers 13 über das Mobilfunknetz 40 an die abseits der Fahrzeugeinrichtung 30 angeordnete zentrale Datenverarbeitungseinrichtung 50 zu senden; eine erste Aktualisierungsaufforderungsnachricht 92 mit wenigstens einem ersten zentralen Wert eines ersten Konfigurationsparameters einer in der zentralen Datenverarbeitungseinrichtung 50 gespeicherten Soll-Konfiguration von zentralen Werten der mehreren Konfigurationsparameter dieser Fahrzeugeinrichtung, der von einem ersten dezentralen Wert des ersten Konfigurationsparameters verschieden ist, von der zentralen Datenverarbeitungseinrichtung mittels ihres Mobilfunk-Sendeempfängers 13 über das Mobilfunknetz 40 zu empfangen; nach dem Empfang der ersten Aktualisierungsaufforderungsnachricht 92 einen finalen dezentralen Hashwert 87des aktualisierten dezentralen Konfigurationsdatensatzes, der die dezentralen Werte der Konfigurationsparameter der aktualisierten Ist-Konfiguration einschließlich des durch den ersten zentralen Wert ersetzten ersten dezentralen Wertes umfasst, durch Anwendung der Hashfunktion auf den aktualisierten dezentralen Konfigurationsdatensatz zu erzeugen; den erzeugten finalen dezentralen Hashwert 87 mittels ihres Mobilfunk-Sendeempfängers 13 über das Mobilfunknetz 40 an die zentrale Datenverarbeitungseinrichtung 50 zu senden; eine Aktualisierungsbeendigungsnachricht 98 von der zentralen Datenverarbeitungseinrichtung 50 mittels ihres Mobilfunk-Sendeempfängers 13 über das Mobilfunknetz 40 zu empfangen und infolge des Empfangs der Aktualisierungsbeendigungsnachricht 98 die zu der zentralen Datenverarbeitungseinrichtung 50 bestehende initiale Kommunikationsverbindung abzubrechen.

Im Gegenzug ist die zentrale Datenverarbeitungseinrichtung 50 ausgebildet, folgende Schritte durchzuführen: den initialen dezentralen Hashwert 81 mittels ihrer zentralen Kommunikationseinrichtung 53 über das Mobilfunknetz 40 von der Fahrzeugeinrichtung 30 zu empfangen; infolge des Empfangs des initialen dezentralen Hashwerts 81 einen zentralen Hashwert eines zentralen Konfigurationsdatensatzes, der die zentralen Werte der Konfigurationsparameter der Soll-Konfiguration der Fahrzeugeinrichtung umfasst, durch Anwendung der Hashfunktion auf den dezentralen Konfigurationsdatensatz zu erzeugen; diesen erzeugten zentralen Hashwert mit dem empfangenen initialen dezentralen Hashwert 81 zu vergleichen und dabei einen Unterschied zwischen dem erzeugten zentralen Hashwert und dem empfangenen initialen dezentralen Hashwert 81 festzustellen; wenigstens den ersten zentralen Wert des ersten Konfigurationsparameters, der von dem ersten dezentralen Wert des ersten Konfigurationsparameters verschieden ist, in der ersten Aktualisierungsaufforderungsnachricht 92 mittels ihrer zentralen Kommunikationseinrichtung 53 über das Mobilfunknetz 40 an die Fahrzeugeinrichtung 30 zu senden, den finalen dezentralen Hashwert 87 mittels ihrer zentralen Kommunikationseinrichtung 53 über das Mobilfunknetz 40 von der Fahrzeugeinrichtung 30 zu empfangen; den erzeugten zentralen Hashwert mit dem empfangenen finalen dezentralen Hashwert 87 zu vergleichen und dabei eine Übereinstimmung des erzeugten zentralen Hashwerts mit dem empfangenen finalen dezentralen Hashwert 87 festzustellen und eine Aktualisierungsbeendigungsnachricht 98 mittels ihrer zentralen Kommunikationseinrichtung 53 über das Mobilfunknetz 40 an die Fahrzeugeinrichtung 30 zu senden.

Alternativ ist es möglich, dass die zentrale Datenverarbeitungseinrichtung 50 ausgebildet ist, nach dem Empfang des finalen dezentralen Hashwerts 87 anstatt die Aktualisierungsbeendigungsnachricht 97 an die Fahrzeugeinrichtung 30 zu senden die mit der Fahrzeugeinrichtung bestehende initiale Kommunikationsverbindung abzubrechen.

In diesem alternativen Fall empfängt die Fahrzeugeinrichtung 30 keine Aktualisierungsbeendigungsnachricht 98 von der zentralen Datenverarbeitungseinrichtung 50, sondern stellt nur fest, dass die initiale Kommunikationsverbindung, die zwischen der Fahrzeugeinrichtung 30 und der zentralen Datenverarbeitungseinrichtung 50 bestand, abgebrochen wurde.

Die zentrale Datenverarbeitungseinrichtung 50 identifiziert die zentralen Werte der Soll-Konfiguration der Fahrzeugeinrichtung 30 anhand der Kennung der Fahrzeugeinrichtung 30 in Form der Mobilfunknummer des Mobilfunk-Sendeempfängers 13 der Fahrzeugeinrichtung 30. Alternativ identifiziert die zentrale Datenverarbeitungseinrichtung 50 die zentralen Werte der Fahrzeugeinrichtung 30 anhand der Kennung der Fahrzeugeinrichtung 30 in Form einer Seriennummer der Fahrzeugeinrichtung 30, die die Fahrzeugeinrichtung im Rahmen der initialen Statusnachricht 91 an die zentrale Datenverarbeitungseinrichtung 50 gesendet hat.

In diesem ersten Ausführungsbeispiel sind die dezentralen Werte folgender zweier interner Konfigurationsparameter der Ist-Konfiguration der Fahrzeugeinrichtung 30 aktualisierungsbedürftig: die aktuelle Software-Version der Fahrzeugeinrichtung (Ist-Zustand = Version 8) und der Dienststatus des Mautdienstes für Österreich (Dienst AT, Ist-Zustand = deaktiviert). Dazu sind unter der Kennung der Fahrzeugeinrichtung 30 die zentralen Werte dieser beiden internen Konfigurationsparameter der Soll-Konfiguration gespeichert, die lauten: Soll-Zustand der Software-Version = Version 9 und Soll-Zustand des Dienstes AT = aktiviert.
Dabei ist die aktuelle Software-Version nicht zu verwechseln mit der derzeit auf der Fahrzeugeinrichtung 30 installierten Software-Version, deren Versionsinformation zusätzlich - wenn auch nicht als dezentraler Wert eines Konfigurationsparameters, der in der zentralen Datenverarbeitungseinrichtung 50 geführt wird - zusätzlich übertragen werden kann. Aktuelle Software-Version und installierte Software-Version sind solange verschieden, wie auf der Fahrzeugeinrichtung 30 eine aktuelle Software-Version noch nicht installiert wurde.

Nachdem die Fahrzeugeinrichtung 30 zu Beginn der Aktualisierungstätigkeitsphase den Aufbau der Kommunikationsverbindung zu der dezentralen Datenverarbeitungseinrichtung 50 durch einen entsprechenden Wählvorgang initiiert hat und das Mobilfunknetz 40 die Kommunikationsverbindung zwischen der Fahrzeugeinrichtung 30 und der dezentralen Datenverarbeitungseinrichtung 50 etabliert hat, liest der Fahrzeuggerät-Prozessor 11 die aktualisierungsbedürftige Ist-Konfiguration von dezentralen Werten der Fahrzeugeinrichtung 30 aus dem Sicherheitsmodul 18 aus, wendet die Hashfunktion auf die aktualisierungsbedürftige Ist-Konfiguration zur Bildung des initialen dezentralen Hashwerts 81 an und weist den Mobilfunk-Sendeempfänger 13 an, den initialen dezentralen Hashwert 81 der Ist-Konfiguration von dezentralen Werten der Fahrzeugeinrichtung 30 (darunter den des Fahrzeugkennzeichens, den der Gewichtsklasse (oder: zulässiges Gesamtgewicht), den der Achsklasse (oder: Achszahl), den der Schadstoffklasse, den der aktuellen Software-Version, den der zu der aktuellen Software-Version zuletzt erhaltenen Änderungsdatei (patch, hier patch 8.5), den des Installationskommandos (hier gleich 1, d. h. Installationskommando erhalten), den des Zustands des Dienstes DE (aktiviert), den des Zustands des Dienstes AT (nicht aktiviert), den der Aktualisierungsperiode (eine Stunde) und den des Mauterhebungsmodus (zentral)) zusammen mit der Kennung der Fahrzeugeinrichtung 30 an die zentrale Datenverarbeitungseinrichtung 50 zu senden, die diesen initialen dezentralen Hashwert 81 über die zentrale Kommunikationseinrichtung 53, beispielsweise ein Gateway, empfängt.

In der zentralen Datenverarbeitungsvorrichtung 50 sind zu allen Konfigurationsparametern der aktualisierungsbedürftigen Ist-Konfiguration zentrale Werte der der Soll-Konfiguration zu der Kennung der Fahrzeugeinrichtung 30 im zweiten zentralen Datenspeicher 57 der zentralen Datenverarbeitungseinrichtung 50 gespeichert.
Mangels dezentraler Werte ist die zentrale Datenverarbeitungseinrichtung 50 allerdings nicht in der Lage zu ermitteln, von welchen Konfigurationsparametern die zentralen Werte von den dezentralen Werten verschieden sind. Der Unterschied zwischen dem empfangenen initialen dezentralen Hashwert 81 und dem zentralen Hashwert weist jedoch daraufhin, das wenigstens für einen (der zentralen Datenverarbeitungseinrichtung 50 unbekannten) Konfigurationsparameter der zentrale Wert von dem dezentralen Wert verschieden ist und mithin der Wert wenigstens eines Konfigurationsparameters aktualisiert werden muss.
Um die Anzahl der Nachrichten, die zwischen der Fahrzeugeinrichtung 30 und der zentralen Datenverarbeitungseinrichtung 50 zur Aktualisierung der Ist-Konfiguration nach der Feststellung der Aktualisierungsbedürftigkeit ausgetauscht werden müssen, so gering wie möglich zu halten, wird auf die Bestimmung der aktualisierungsbedürftigen Konfigurationsparameter verzichtet.
Der zentrale Prozessor 51 weist deshalb die zentrale Kommunikationseinrichtung 53 an, in einer Aktualisierungsaufforderungsnachricht 92 sämtliche zentralen Werten aller Konfigurationsparameter der Soll-Konfiguration - unabhängig davon ob sie von den dezentralen Werten der entsprechenden Konfigurationsparameter verschieden sind oder nicht-zusammen mit der Aktualisierungsdatei patch 9.1 über das Mobilfunknetz 40 an die Fahrzeugeinrichtung 30 zu versenden.
Von diesen sämtlichen zentralen Werten ist eine Gruppe von den zentralen Werten aller derjenigen
Konfigurationsparameter umfasst, deren dezentraler Wert jeweils von dem zentralen Werten verschieden ist, nämlich: für den Zustand des Dienstes AT, dessen zentralen Wert "aktiviert" von dem dezentralen Wert "nicht aktiviert" verschieden ist, für die Software-Version dessen zentralen Wert "9" von dem dezentralen Wert "8" verschieden ist, für die zuletzt erhaltene Änderungsdatei dessen zentralen Wert "patch 9.1", der von dem dezentralen Wert "patch 8.5" verschieden ist, und für das Installationskommando den zentralen Wert "0" (d. h. die Anweisung, keine Installation durchzuführen), der von dem dezentralen Wert "1" verschieden ist.
Damit umfasst die Aktualisierungsaufforderungsnachricht 92 auch den erfindungsgemäßen wenigstens einen ersten zentralen Wert wenigstens eines ersten Konfigurationsparameters, der von einem ersten dezentralen Wert des ersten Konfigurationsparameters verschieden ist.

Die Fahrzeugeinrichtung 30 empfängt die Aktualisierungsaufforderungsnachricht 92 mittels ihres Mobilfunk-Sendeempfängers 13, und der Fahrzeuggerät-Prozessor 11 (auch als dezentraler Prozessor 11 bezeichnet) weist das Sicherheitsmodul 18 an, die sämtlichen zentralen Werte aller Konfigurationsparameter der aktualisierungsbedürftigen Ist-Konfiguration, anstelle der jeweiligen dezentralen Werte im Speicherbereich 18b zu speichern, und speichert die Aktualisierungsdatei patch 9.1 im Daten-Schreib-Lese-Speicher 17a.
Die Fahrzeugeinrichtung 30 bildet insofern eine neue Ist-Konfiguration, indem.sie die dezentralen Werte der ursprünglichen Ist-Konfiguration mit den zentralen Werten der Soll-Konfiguration aus der Mautzentrale 58 überschreibt. Der Fahrzeuggerät-Prozessor 11 liest anschießend alle in dem Speicherbereich 18b des Sicherheitsmoduls 18 gespeicherten Werte der Konfigurationsparameter, die teils mit (alten) dezentralen Werten und teils mit zentralen (neuen dezentralen) Werten die neue, aktualisierte Ist-Konfiguration bilden, aus dem Sicherheitsmodul 18 aus, wendet die Hashfunktion auf die aktualisierte Ist-Konfiguration zur Bildung des finalen dezentralen Hashwerts 87 an und weist den Mobilfunk-Sendeempfänger 13 an, den finalen dezentralen Hashwert 87 zusammen mit der Kennung der Fahrzeugeinrichtung 30 über das Mobilfunknetz 40 an die zentrale Datenverarbeitungseinrichtung 50 zu senden.

Der zentrale Prozessor 51 der zentralen Datenverarbeitungseinrichtung 50 empfängt den finalen dezentralen Hashwert 87 von der aktualisierten Ist-Konfiguration mittels der zentralen Kommunikationseinrichtung 53 und vergleicht den finalen dezentralen Hashwert 87 mit dem zentralen Hashwert. Der zentrale Prozessor 51 stellt dabei fest, dass der finale dezentrale Hashwert 87 mit dem zentralen Hashwert übereinstimmt, was bedeutet, dass für alle Konfigurationsparater der aktualisierten Ist-Konfiguration und de Soll-Konfiguration die (nunmehr aktualisierten) dezentralen Werte mit den zentralen Werten übereinstimmen. Infolge dieser Feststellung sendet der zentrale Prozessor 51 mittels der zentralen Kommunikationseinrichtung 53 eine Aktualisierungsbeendigungsnachricht 98 über das Mobilfunknetz 40 an die Fahrzeugeinrichtung 30.
Der Fahrzeuggerät-Prozessor 11 der Fahrzeugeinrichtung 30 empfängt anschließend die
Aktualisierungsbeendigungsnachricht 98 mittels ihres Mobilfunk-Sendeempfängers 13 und weist infolge des Empfangs der Aktualisierungsbeendigungsnachricht 98 den Mobilfunk-Sendeempfänger 13 an, die initiierte Kommunikationsverbindung, die seit der Initiierung nicht unterbrochen wurde, zu der zentralen Datenverarbeitungseinrichtung 50 abzubrechen ("aufzulegen").
Alternativ ist es möglich, dass die zentrale Datenverarbeitungseinrichtung 50 keine Aktualisierungsbeendigungsnachricht 98 an die Fahrzeugeinrichtung 50 sendet und stattdessen von sich aus die von der Fahrzeugeinrichtung 30 initiierte und zwischen der Fahrzeugeinrichtung 30 und der zentralen Datenverarbeitungseinrichtung 50 bestehende Kommunikationsverbindung abbricht.

Mit dem Abbruch der initiierten Kommunikationsverbindung ist die Aktualisierungsphase beendet und es beginnt eine Aktualisierungserfolgsphase. Dazu wechselt die Fahrzeugeinrichtung 30 zurück in die uneingeschränkte Betriebsbereitschaft. Die Fahrzeugeinrichtung 30 ist nämlich im Zustand der eingeschränkten Betriebsbereitschaft ausgebildet, infolge des Abbruchs der zu der zentralen Datenverarbeitungseinrichtung bestehenden Kommunikationsverbindung in den Zustand der uneingeschränkten Betriebsbereitschaft zurück zu wechseln. In diesem Zustand der uneingeschränkten Betriebsbereitschaft ist die Fahrzeugeinrichtung nunmehr auch ausgebildet, beispielsweise auf eine über das Mobilfunknetz eingehende Aufforderung der zentralen Datenverarbeitungseinrichtung 50 hin, eine Streckeninformation von im Zustand der eingeschränkten Betriebsbereitschaft erfassten Positionsdaten an die zentrale Datenverarbeitungseinrichtung 50 zu senden.

In Aktualisierungserfolgsphase ist die Fahrzeugeinrichtung 30 ausgebildet, infolge des Empfangs eines Anforderungssignals von einer straßenseitigen DSRC-Kommunikationseinrichtung 63a wenigstens einen angeforderten Wert wenigstens eines angeforderte Konfigurationsparameters der aktualisierten Ist-Konfiguration im Rahmen eines Antwortsignals an diese straßenseitige Kommunikationseinrichtung zu senden.
Während der Aktualisierungsphase ist die Fahrzeugeinrichtung 30 ausgebildet, infolge des Empfangs eines Anforderungssignals von einer straßenseitigen DSRC-Kommunikationseinrichtung 63a wenigstens einen angeforderten Wert wenigstens eines angeforderte Konfigurationsparameters der aktualisierungsbedürftigen Ist-Konfiguration und/ oder wenigstens einen Hinweis darauf, dass sich die Fahrzeugeinrichtung in einer Aktualisierungsphase und/ oder im Rahmen eines Antwortsignals an diese straßenseitige Kommunikationseinrichtung zu senden.

Im Zustand der der uneingeschränkten Betriebsbereitschaft ist die Fahrzeugeinrichtung ausgebildet, infolge des Empfangs eines Anforderungssignals von einer straßenseitigen DSRC-Kommunikationseinrichtung 63a wenigstens einen angeforderten Wert wenigstens eines angeforderte Konfigurationsparameters der in der Fahrzeugeinrichtung 30 gespeicherten Ist-Konfiguration, unabhängig davon ob die gespeicherte Ist-Konfguration die aktualisierungsbedürftige oder die aktualisierte Ist-Konfiguration ist, zusammen mit einem Hinweis darauf, dass sich die Fahrzeugeinrichtung im Zustand der uneingeschränkten Betriebsbereitschaft befindet, im Rahmen eines Antwortsignals an diese straßenseitige Kommunikationseinrichtung 63a zu senden.
Im Zustand der der eingeschränkten Betriebsbereitschaft ist die Fahrzeugeinrichtung ausgebildet, infolge des Empfangs eines Anforderungssignals von einer straßenseitigen DSRC-Kommunikationseinrichtung 63a wenigstens einen angeforderten Wert wenigstens eines angeforderte Konfigurationsparameters der in der Fahrzeugeinrichtung 30 gespeicherten Ist-Konfiguration, unabhängig davon ob die gespeicherte Ist-Konfiguration die aktualisierungsbedürftige oder die aktualisierte Ist-Konfiguration ist, zusammen mit einem Hinweis darauf, dass sich die Fahrzeugeinrichtung im Zustand der eingeschränkten Betriebsbereitschaft befindet, im Rahmen eines Antwortsignals an diese straßenseitige Kommunikationseinrichtung 63a zu senden.
Nach dem Wechsel in den Zustand der uneingeschränkten Betriebsbereitschaft kann im Zustand der uneingeschränkten Betriebsbereitschaft eine neue Aktualisierungsbereitschaftsphase beginnen, in der die Fahrzeugeinrichtung ausgebildet ist, ein neues Ereignis zur Auslösung einer Aktualisierungstätigkeit zu erfassen.

### ZWEITES AUSFÜHRUNGSBEISPIEL

Die Fahrzeugeinrichtung 30 ist ausgebildet, in einer Aktualisierungsbereitschaftsphase das Inbetriebnehmen, das Einschalten oder die Stromversorgung der Fahrzeugeinrichtung 30 nach einem Außerbetriebnehmen, einem Ausschalten oder einer Stromabkopplung der Fahrzeugeinrichtung 30 als ein Ereignis zur Auslösung einer Aktualisierungstätigkeit zu erfassen und infolge der Erfassung eines solchen Ereignisses aus der Aktualisierungsbereitschaftsphase in eine Aktualisierungstätigkeitsphase zu wechseln, in der die Fahrzeugeinrichtung 30 ausgebildet ist, mit der zentralen Datenverarbeitungseinrichtung 50 über das Mobilfunknetz 40 zu kommunizieren.
Dabei befindet sich die Fahrzeugeinrichtung nach dem Außerbetriebnehmen, dem Ausschalten oder der Stromabkopplung der Fahrzeugeinrichtung 30 und vor dem Inbetriebnehmen, dem Einschalten oder der Stromversorgung der Fahrzeugeinrichtung 30 in einem Zustand der Betriebsunfähigkeit, in der die Fahrzeugeinrichtung ausgebildet ist, keine Positionsdaten zu erfassen, keine in einem anderen Zustand erfassten Positionsdaten zu einer Streckeninformation zu verarbeiten und keine Streckeninformation von ein einem anderen Zustand erfasster Positionsdaten an die zentrale Datenverarbeitungseinrichtung 50 zu senden. Die Fahrzeugeinrichtung ist ausgebildet, infolge des Inbetriebnehmens, des Einschaltens oder der Stromversorgung der Fahrzeugeinrichtung 30 aus dem Zustand der Betriebsunfähigkeit in einen Zustand der eingeschränkten Betriebsfähigkeit zu wechseln, in der die Fahrzeugeinrichtung ausgebildet ist, den Zustand der eingeschränkten Betriebsbereitschaft zu signalisieren und Positionsdaten zu erfassen, ohne die in diesem Zustand der eingeschränkten Betriebsbereitschaft erfassten Positionsdaten zu einer Streckeninformation zu verarbeiten und ohne eine Streckeninformation von in diesem Zustand der eingeschränkten Betriebsbereitschaft erfassten Positionsdaten an die zentrale Datenverarbeitungseinrichtung zu senden.

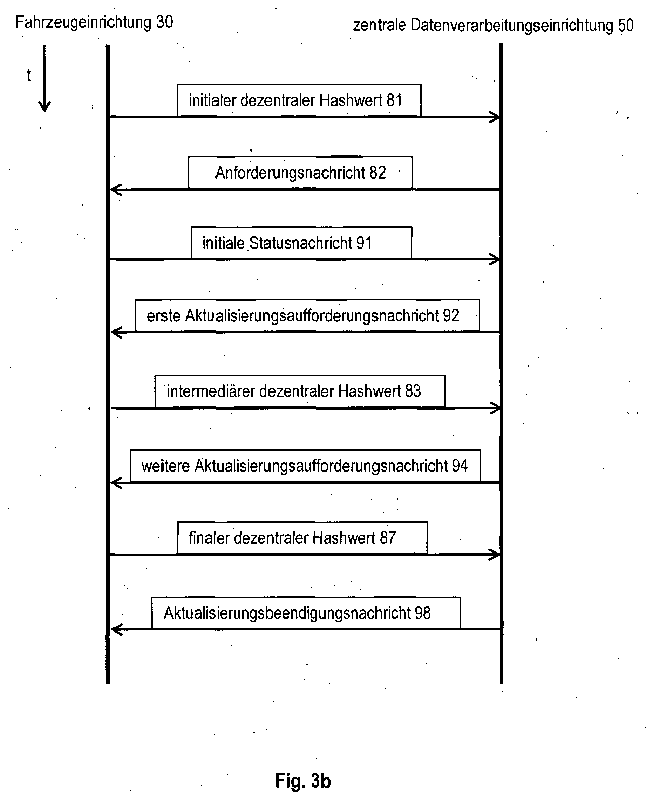

Ferner ist die Fahrzeugeinrichtung ist 30 unter Verweis auf Fig. 3b im Zustand der eingeschränkten Betriebsbereitschaft ausgebildet, in der Aktualisierungstätigkeitsphase folgende Schritte durchzuführen: den Aufbau einer initialen Kommunikationsverbindung mittels ihres Mobilfunk-Sendeempfängers 13 über das Mobilfunknetz 40zu der zentralen Datenverarbeitungseinrichtung zu initiieren, einen initialen dezentralen Hashwert 81 eines dezentralen Konfigurationsdatensatzes, der die dezentralen Werte der Konfigurationsparameter der aktualisierungsbedürftigen Ist-Konfiguration umfasst, durch Anwendung einer Hashfunktion auf den dezentralen Konfigurationsdatensatz zu erzeugen; den erzeugten initialen dezentralen Hashwert 81 mittels ihres Mobilfunk-Sendeempfängers 13 über das Mobilfunknetz 40 an die abseits der Fahrzeugeinrichtung 30 angeordnete zentrale Datenverarbeitungseinrichtung 50 zu senden; eine Anforderungsnachricht 82 von der zentralen Datenverarbeitungseinrichtung 50 zu empfangen; in einer initialen Statusnachricht 91 die aktualisierungsbedürftige Ist-Konfiguration mit den dezentralen Werten der Konfigurationsparameter mittels ihres Mobilfunk-Sendeempfängers 13 über das Mobilfunknetz 40 an die abseits der Fahrzeugeinrichtung 30 angeordnete zentrale Datenverarbeitungseinrichtung 50 zu senden; eine erste Aktualisierungsaufforderungsnachricht 92 mit wenigstens einem ersten zentralen Wert eines ersten Konfigurationsparameters einer in der zentralen Datenverarbeitungseinrichtung 50 gespeicherten Soll-Konfiguration von zentralen Werten der mehreren Konfigurationsparameter dieser Fahrzeugeinrichtung, der von einem ersten dezentralen Wert des ersten Konfigurationsparameters verschieden ist, von der zentralen Datenverarbeitungseinrichtung 50 mittels ihres Mobilfunk-Sendeempfängers 13 über das Mobilfunknetz 40 zu empfangen; nach dem Empfang der ersten Aktualisierungsaufforderungsnachricht 92 einen intermediären dezentralen Hashwert 83 eines teilaktualisierten dezentralen Konfigurationsdatensatzes, der die dezentralen Werte der Konfigurationsparameter der mit dem ersten zentralen Wert teilaktualisierten Ist-Konfiguration umfasst, durch Anwendung einer Hashfunktion auf den dezentralen Konfigurationsdatensatz zu erzeugen; den intermediären dezentralen Hashwert 83 mittels ihres Mobilfunk-Sendeempfängers 13 über das Mobilfunknetz 40an die zentrale Datenverarbeitungseinrichtung 50 zu senden; eine weitere Aktualisierungsaufforderungsnachricht 94 mit einen weiteren zentralen Wert, der von einem weiteren dezentralen Wert wenigstens eines weiteren Konfigurationsparameters der in der zentralen Datenverarbeitungseinrichtung 50 gespeicherten Soll-Konfiguration von zentralen Werten der mehreren Konfigurationsparameter verschieden ist, von der zentralen Datenverarbeitungseinrichtung mittels ihres Mobilfunk-Sendeempfängers 13 über das Mobilfunknetz 40 zu empfangen einen finalen dezentralen Hashwert 87des aktualisierten dezentralen Konfigurationsdatensatzes, der die dezentralen Werte der Konfigurationsparameter der aktualisierten Ist-Konfiguration einschließlich des durch den ersten zentralen Wert ersetzten ersten dezentralen Wertes und des durch den weiteren zentralen Wert ersetzten weiteren dezentralen Werts umfasst, durch Anwendung der Hashfunktion auf den aktualisierten dezentralen Konfigurationsdatensatz zu erzeugen; den erzeugten finalen dezentralen Hashwert 87 mittels ihres Mobilfunk-Sendeempfängers 13 über das Mobilfunknetz 40 an die zentrale Datenverarbeitungseinrichtung 50 zu senden; eine Aktualisierungsbeendigungsnachricht 98 von der zentralen Datenverarbeitungseinrichtung 50 mittels ihres Mobilfunk-Sendeempfängers 13 über das Mobilfunknetz 40 zu empfangen und infolge des Empfangs der Aktualisierungsbeendigungsnachricht 98 die zu der zentralen Datenverarbeitungseinrichtung 50 bestehende initiale Kommunikationsverbindung abzubrechen.
Im Gegenzug ist die zentrale Datenverarbeitungseinrichtung 50 ausgebildet, den initialen dezentralen Hashwert 81 mittels ihrer zentralen Kommunikationseinrichtung 53 über das Mobilfunknetz 40 von der Fahrzeugeinrichtung 30 zu empfangen; infolge des Empfangs des initialen dezentralen Hashwerts 81 einen zentralen Hashwert eines zentralen Konfigurationsdatensatzes, der die zentralen Werte der Konfigurationsparameter der Soll-Konfiguration der Fahrzeugeinrichtung umfasst, durch Anwendung der Hashfunktion auf den dezentralen Konfigurationsdatensatz zu erzeugen; diesen erzeugten zentralen Hashwert mit dem empfangenen initialen dezentralen Hashwert 81 zu vergleichen und dabei einen Unterschied zwischen dem erzeugten zentralen Hashwert und dem empfangenen initialen dezentralen Hashwert 81 festzustellen; infolge dieser Feststellung die Anforderungsnachricht 82 mittels ihrer zentralen Kommunikationseinrichtung 53 über das Mobilfunknetz 40 an die Fahrzeugeinrichtung 30 zu senden;
die initiale Statusnachricht 91 mittels ihrer zentralen Kommunikationseinrichtung 53 über das Mobilfunknetz 40 von der Fahrzeugeinrichtung 30 zu empfangen; infolge des Empfangs der initialen Statusnachricht 91 wenigstens den ersten zentralen Wert des ersten Konfigurationsparameters, der von dem ersten dezentralen Wert des ersten Konfigurationsparameters verschieden ist, in der ersten Aktualisierungsaufforderungsnachricht 92 mittels ihrer zentralen Kommunikationseinrichtung 53 über das Mobilfunknetz 40 an die Fahrzeugeinrichtung 30 zu senden;
den intermediären dezentralen Hashwert 83 mittels ihrer zentralen Kommunikationseinrichtung 53 über das Mobilfunknetz 40 von der Fahrzeugeinrichtung 30 zu empfangen; infolge des Empfangs des intermediären dezentralen Hashwerts 83 wenigstens einen weiteren zentralen Wert, der von einem weiteren dezentralen Wert wenigstens eines weiteren Konfigurationsparameters verschieden ist, in wenigstens einer weiteren Aktualisierungsaufforderungsnachricht 94 mittels ihrer zentralen Kommunikationseinrichtung 53 über das Mobilfunknetz 40an die Fahrzeugeinrichtung 30 zu senden; den finalen dezentralen Hashwert 87 mittels ihrer zentralen Kommunikationseinrichtung 53 über das Mobilfunknetz 40 von der Fahrzeugeinrichtung 30 zu empfangen; den erzeugten zentralen Hashwert mit dem empfangenen finalen dezentralen Hashwert 87 zu vergleichen und dabei eine Übereinstimmung des erzeugten zentralen Hashwerts mit dem empfangenen finalen dezentralen Hashwert 87 festzustellen und eine Aktualisierungsbeendigungsnachricht 98 mittels ihrer zentralen Kommunikationseinrichtung 53 über das Mobilfunknetz 40 an die Fahrzeugeinrichtung 30 zu senden.
Alternativ ist es möglich, dass die zentrale Datenverarbeitungseinrichtung 50 ausgebildet ist, nach dem Empfang der finalen Statusnachricht 97 anstatt die Aktualisierungsbeendigungsnachricht 97 an die Fahrzeugeinrichtung 30 zu senden die mit der Fahrzeugeinrichtung bestehende initiale Kommunikationsverbindung abzubrechen.
In diesem alternativen Fall empfängt die Fahrzeugeinrichtung 30 keine Aktualisierungsbeendigungsnachricht 98 von der zentralen Datenverarbeitungseinrichtung 50, sondern stellt nur fest, dass die initiale Kommunikationsverbindung, die zwischen der Fahrzeugeinrichtung 30 und der zentralen Datenverarbeitungseinrichtung 50 bestand, abgebrochen wurde.

Die zentrale Datenverarbeitungseinrichtung 50 identifiziert die zentralen Werte der Soll-Konfiguration der Fahrzeugeinrichtung 30 anhand der Kennung der Fahrzeugeinrichtung 30 in Form der Mobilfunknummer des Mobilfunk-Sendeempfängers 13 der Fahrzeugeinrichtung 30. Alternativ identifiziert die zentrale Datenverarbeitungseinrichtung 50 die zentralen Werte der Fahrzeugeinrichtung 30 anhand der Kennung der Fahrzeugeinrichtung 30 in Form einer Seriennummer der Fahrzeugeinrichtung 30, die die Fahrzeugeinrichtung im Rahmen der initialen Statusnachricht 91 an die zentrale Datenverarbeitungseinrichtung 50 gesendet hat.

In diesem zweiten Ausführungsbeispiel sind die dezentralen Werte folgender zweier interner Konfigurationsparameter der Ist-Konfiguration der Fahrzeugeinrichtung 30 aktualisierungsbedürftig: die aktuelle Software-Version der Fahrzeugeinrichtung (Ist-Zustand = Version 8) und das Fahrzeugkennzeichen (Ist-Zustand = FKZ-alt). Dazu sind unter der Kennung der Fahrzeugeinrichtung 30 die zentralen Werte dieser beiden internen Konfigurationsparameter der Soll-Konfiguration gespeichert, die lauten: Soll-Zustand der Software-Version = Version 9 und Soll-Zustand des Fahrzeugkennzeichens FKZ-neu. Dieses neue Fahrzeugkennzeichen wurde zuvor durch den Nutzer unter seinem Nutzernamen und seinem alten Fahrzeugkennzeichen über eine Internet-Schnittstelle, beispielsweise über ein Dialogfenster auf einer Webseite des Mautbetreibers, an die zentrale Datenverarbeitungseinrichtung 50 übermittelt.

Nachdem die Fahrzeugeinrichtung 30 zu Beginn der Aktualisierungstätigkeitsphase den Aufbau der Kommunikationsverbindung zu der dezentralen Datenverarbeitungseinrichtung 50 durch einen entsprechenden Wählvorgang initiiert hat und das Mobilfunknetz 40 die Kommunikationsverbindung zwischen der Fahrzeugeinrichtung 30 und der dezentralen Datenverarbeitungseinrichtung 50 etabliert hat, , liest der Fahrzeuggerät-Prozessor 11 die aktualisierungsbedürftige Ist-Konfiguration von dezentralen Werten der Fahrzeugeinrichtung 30 aus dem Sicherheitsmodul 18 aus, wendet die Hashfunktion auf die aktualisierungsbedürftige Ist-Konfiguration zur Bildung des initialen dezentralen Hashwerts 81 an und weist den Mobilfunk-Sendeempfänger 13 an, den initialen dezentralen Hashwert 81 der Ist-Konfiguration von dezentralen Werten der Fahrzeugeinrichtung 30 (darunter den des Fahrzeugkennzeichens (FKZ-alt), den der Gewichtsklasse (oder: zulässiges Gesamtgewicht), den der Achsklasse (oder: Achszahl), den der Schadstoffklasse, den der aktuellen Software-Version, den der zu der aktuellen Software-Version zuletzt erhaltenen Änderungsdatei (patch, hier patch 8:5), den des Installationskommandos (hier gleich 1, d. h. Installationskommando erhalten), den des Zustands des Dienstes DE (aktiviert), den des Zustands des Dienstes AT (aktiviert), den der Aktualisierungsperiode (eine Stunde) und den des Mauterhebungsmodus (dezentral), die in dem Speicherbereich 18b des Sicherheitsmoduls gespeichert sind) zusammen mit der Kennung der Fahrzeugeinrichtung 30 an die zentrale Datenverarbeitungseinrichtung 50 zu senden, die diesen initialen dezentralen Hashwert 81 über die zentrale Kommunikationseinrichtung 53, beispielsweise ein Gateway, empfängt.
In der zentralen Datenverarbeitungsvorrichtung 50 sind zu allen Konfigurationsparameter der aktualisierungsbedürftigen Ist-Konfiguration zentrale Werte der der Soll-Konfiguration zu der Kennung der Fahrzeugeinrichtung 30 im zweiten zentralen Datenspeicher 57 der zentralen Datenverarbeitungseinrichtung 50 gespeichert.
Mangels dezentraler Wert ist die zentrale Datenverarbeitungseinrichtung 50 allerdings zunächst nicht in der Lage zu ermitteln, von welchen Konfigurationsparametern die zentralen Werte von den dezentralen Werten verschieden sind. Der Unterschied zwischen dem empfangenen initialen dezentralen Hashwert 81 und dem zentralen Hashwert weist jedoch daraufhin, das wenigstens für einen (der zentralen Datenverarbeitungseinrichtung 50 unbekannten) Konfigurationsparameter der zentrale Wert von dem dezentralen Wert verschieden ist und mithin der Wert wenigstens eines Konfigurationsparameters aktualisiert werden muss.
Um die Datenmenge, die von der zentralen Datenverarbeitungseinrichtung 50 an die Fahrzeugeinrichtung 30 zur Aktualisierung der Ist-Konfiguration nach der Feststellung.der Aktualisierungsbedürftigkeit übermittelt werden muss, so gering wie möglich zu halten, benötigt die zentrale Datenverarbeitungseinrichtung 50 die dezentralen Werte der aktualisierungsbedürftigen Ist-Konfiguration, um zu ermitteln, für welche Konfigurationsparameter eine Aktualisierung erforderlich ist. Aus diesem Grund sendet die zentrale Datenverarbeitungseinrichtung 50 eine Anforderungsnachricht 82 an die Fahrzeugeinrichtung 30, mit der sie diese dezentralen Werte anfordert.
Infolge des Empfangs der Anforderungsnachricht 82 liest der Fahrzeuggerät-Prozessor 11 die Ist-Konfiguration von dezentralen Werten der Fahrzeugeinrichtung 30 erneut aus dem Sicherheitsmodul 18 aus und weist den Mobilfunk-Sendeempfänger 13 an, die Ist-Konfiguration von dezentralen Werten der Fahrzeugeinrichtung 30, darunter den des Fahrzeugkennzeichens (FKZ-alt), den der Gewichtsklasse (oder: zulässiges Gesamtgewicht), den der Achsklasse (oder: Achszahl), den der Schadstoffklasse, den der aktuellen Software-Version, den der zu der aktuellen Software-Version zuletzt erhaltenen Änderungsdatei (patch, hier patch 8.5), den des Installationskommandos (hier gleich 1, d. h. Installationskommando erhalten), den des Zustands des Dienstes DE (aktiviert), den des Zustands des Dienstes AT (aktiviert), den der Aktualisierungsperiode (eine Stunde) und den des Mauterhebungsmodus (dezentral), die in dem Speicherbereich 18b des Sicherheitsmoduls gespeichert sind, zusammen mit der Kennung der Fahrzeugeinrichtung 30 in der initialen Statusnachricht 91 an die zentrale Datenverarbeitungseinrichtung 50 zu senden.
In der zentralen Datenverarbeitungsvorrichtung 50 werden alle diese dezentralen Werte dieser Ist-Konfiguration über die zentrale Kommunikationseinrichtung 53 empfangen und vom zentralen Prozessor 51 mit den zentralen Werten der entsprechenden Konfigurationsparameter der Soll-Konfiguration verglichen, die zu der Kennung der Fahrzeugeinrichtung 30 im zweiten zentralen Datenspeicher 57 der zentralen Datenverarbeitungseinrichtung 50 gespeichert sind.
Der zentrale Prozessor 51 ermittelt dabei für das Fahrzeugkennzeichen den zentralen Wert "FKZ-neu", der von dem dezentralen Wert "FKZ-alt" verschieden ist, für die Software-Version den zentralen Wert "9", der von dem dezentralen Wert "8" verschieden ist, für die zuletzt erhaltene Änderungsdatei den zentralen Wert "patch 9.1", der von dem dezentralen Wert "patch 8.5" verschieden ist, und für das Installationskommando den zentralen Wert "0" (d. h. die Anweisung, keine Installation durchzuführen), der von dem dezentralen Wert "1" verschieden ist.
Anschließend bestimmt der zentrale Prozessor 51 zentrale Datenverarbeitungseinrichtung 50 einen ersten zentralen Wert nach Maßgabe einer in der zentralen Datenverarbeitungseinrichtung 50 gespeicherten Aktualisierungsordnung, die eine Aktualisierung des ersten Konfigurationsparameters im Zeitrang vor wenigstens einem anderen Konfigurationsparameter vorsieht.
Alternativ zu dieser Ermittlung mehrerer, vorzugsweise aller, aktualisierungsbedürftigen Konfigurationsparameter, deren zentrale und dezentrale Werte verschieden sind, und der anschließenden Verwendung desjenigen aktualisierungsbedürftigen Konfigurationsparameters als erstem Konfigurationsparameter, der in der Aktualisierungsordnung gegenüber jedem anderen aktualisierungsbedürftigen Konfigurationsparameter den höchsten Rang einnimmt, kann ein schrittweiser Vergleich nach der Aktualisierungsordnung und Verwendung desjenigen Konfigurationsparameters als erstem Konfigurationsparameter, für den ein erster Vergleich seiner dezentralen und zentralen Werte deren Verschiedenheit ergeben hat, vorgesehen sein. In diesem Fall sind der zentralen Datenverarbeitungseinrichtung 50 die übrigen aktualisierungsbedürftigen Konfigurationsparameter, die außer dem ersten Konfigurationsparameter zu aktualisieren wären, zum Zeitpunkt der Bestimmung desjenigen (ersten) Konfigurationsparameters, der zuerst zu aktualisierten ist, noch nicht bekannt.

In der Aktualisierungsordnung ist der Konfigurationsparameter des Fahrzeugkennzeichens gegenüber den übrigen zu aktualisierenden Konfigurationsparametern (Software-Version, zuletzt erhaltene Änderungsdatei, Installationskommando) höherrangig eingeordnet, so dass der zentrale Prozessor 51 daraufhin mittels der zentralen Kommunikationseinrichtung 53 eine Aktualisierungsaufforderungsnachricht 92 über das Mobilfunknetz 40 an die Fahrzeugeinrichtung 30 versendet, die von allen zu aktualisierenden Konfigurationsparametern, deren dezentrale Werte von den zentralen Werten verschieden sind, nur den zentralen Wert "FKZ-neu" des höchstrangigen Konfigurationsparameters umfasst.
Damit sendet die zentrale Datenverarbeitungseinrichtung 50 infolge des Empfangs der initialen Statusnachricht 91 außer dem ersten zentralen Wert des ersten Konfigurationsparameters des Fahrzeugkennzeichens keinen weiteren zentralen Wert eines weiteren Konfigurationsparameters in der ersten Aktualisierungsaufforderungsnachricht 92an die Fahrzeugeinrichtung 30 und speichert eine erste Übermittlungsinformation darüber ab, dass dieser erste zentrale Wert mit der ersten Aktualisierungsaufforderungsnachricht 92 übermittelt wurde.

Die Fahrzeugeinrichtung 30 empfängt die Aktualisierungsaufforderungsnachricht 92 mittels ihres Mobilfunk-Sendeempfängers 13, und der Fahrzeuggerät-Prozessor 11 (auch als dezentraler Prozessor 11 bezeichnet) weist das Sicherheitsmodul 18 an, den zentralen Werte des Konfigurationsparameters des Fahrzeugkennzeichens, dessen dezentraler Werte von dem zentralen Wert verschieden ist, anstelle der dezentralen Wertes im Speicherbereich 18b zu speichern.
Die Fahrzeugeinrichtung 30 bildet insofern eine neue Ist-Konfiguration, indem sie den dezentralen Wert "FKZ-alt" der ursprünglichen Ist-Konfiguration mit dem zentralen Wert "FKZ-neu" der Soll-Konfiguration aus der Mautzentrale 58 überschreibt.
Der Fahrzeuggerät-Prozessor 11 liest anschießend alle in dem Speicherbereich 18b des Sicherheitsmoduls 18 gespeicherten Werte der Konfigurationsparameter, die teils mit (alten) dezentralen Werten und teils mit dem zentralen (neuen dezentralen) Wert die neue, wenn auch nur teilaktualisierte Ist-Konfiguration bilden, aus dem Sicherheitsmodul 18 aus, bildet unter Anwendung der Hashfunktion auf die Werte der teilaktualisierten Ist-Konfiguration einen intermediären dezentralen Hashwert 83 der teilaktualisierten Ist-Konfiguration und weist den Mobilfunk-Sendeempfänger 13 an, den intermediären dezentralen Hashwert 83 zusammen mit der Kennung der Fahrzeugeinrichtung 30 über das Mobilfunknetz 40 an die zentrale Datenverarbeitungseinrichtung 50 zu senden.
Damit sendet die Fahrzeugeinrichtung 30 nach dem Empfang der ersten Aktualisierungsaufforderungsnachricht 92 einen intermediären dezentralen Hashwert 83 der teilaktualisierten Ist-Konfiguration von dezentralen Werten einschließlich nur eines zentralen Wertes der Gruppe von zentralen Werten derjenigen bestimmten Konfigurationsparameter, deren dezentrale Werte von den zentralen Werten verschieden sind, an die zentrale Datenverarbeitungseinrichtung 50.
Die zentrale Datenverarbeitungseinrichtung 50 ist durch die Registrierung der ersten Übermittlungsinformation ausgebildet, zu prüfen, ob der intermediäre dezentrale Hashwert von dem initialen dezentralen Hashwert verschieden ist, und dann ein Fehlersignal zu erzeugen, wenn die Prüfung ergibt, dass der intermediäre dezentrale Hashwert 83 nicht von dem initialen dezentralen Hashwert 81 verschieden ist. Denn ein solcher erneuter Empfang des initialen dezentralen Hashwertes der aktualisierungsbedürftigen Ist-Konfiguration bedeutet, dass die Fahrzeugeinrichtung 30 die Aktualisierungsaufforderungsnachricht 92 nicht oder nur teilweise empfangen oder verarbeitet hat.
Des Weiteren ist die zentrale Datenverarbeitungseinrichtung 50 ausgebildet, für den Fall, dass die Prüfung ergibt, dass die zentrale Datenverarbeitungseinrichtung 50 einen intermediären dezentralen Hashwert 83 erhalten hat, der dem initialen dezentralen Hashwert 81 entspricht - und insofern ein erster vergeblicher Aktualisierungsversuch stattgefunden hat -, den weiteren Aktualisierungsprozess zu unterbinden und anstelle der weiteren Aktualisierungsaufforderungsnachricht 94 die Aktualisierungsbeendigungsnachricht 98 mit einer Fehlermeldung an die Fahrzeugeinrichtung 30 zu senden. Infolge des Empfangs der Fehlermeldung wechselt die Fahrzeugeinrichtung aus dem Zustand der eingeschränkten Betriebsfähigkeit in einen Zustand der mangelnden Betriebsfähigkeit, in dem die Fahrzeugeinrichtung ausgebildet ist, keine Positionsdaten zu erfassen, keine im Zustand der mangelnden Betriebsfähigkeit erfassten Positionsdaten zu einer Streckeninformation zu verarbeiten oder keine Streckeninformation von im Zustand der mangelnden Betriebsfähigkeit erfasster Positionsdaten an die zentrale Datenverarbeitungseinrichtung 50 zu senden.
In einer Variante dieses zweiten Ausführungsbeispiels kann die zentrale Datenverarbeitungseinrichtung 50 ausgebildet sein, mehrere Versuche der Aktualisierung eines bestimmten dezentralen Wertes der Ist-Konfiguration mittels eines bestimmten zentralen Wertes der Soll-Konfiguration, der von dem bestimmten dezentralen Wert verschieden ist, durch Übersenden einer weiteren oder mehrerer weiterer Aktualisierungsaufforderungsnachrichten 94 und Empfangen jeweils einer von mehreren intermediären Statusnachrichten 93 jeweils zwischen einer vorhergehenden Aktualisierungsaufforderungsnachricht 92 und einer nachfolgenden weiteren Aktualisierungsaufforderungsnachricht 94 durchzuführen und die vergeblichen Aktualisierungsversuche, die sie durch den Vergleich von aufeinander folgend von der Fahrzeugeinrichtung 30 gesendeten intermediären dezentralen Hashwerten 83 im Falle derer Übereinstimmung feststellt, zu zählen und erst nach der Feststellung einer vorbestimmten Anzahl an vergeblichen Aktualisierungsversuchen (beispielsweise drei) eine Fehlermeldung zu erzeugen.

Die zentrale Datenverarbeitungseinrichtung 50 ist in diesem zweiten Ausführungsbeispiel auch ausgebildet, für den Fall, dass die Prüfung ergibt, dass die zentrale Datenverarbeitungseinrichtung 50 einen intermediären dezentralen Hashwert 83 erhalten hat, der von dem initialen dezentralen Hashwert 81 verschieden ist, einen in der Aktualisierungsordnung nach dem ersten zentralen Wert des ersten Konfigurationsparametes nächstfolgenden weiteren zentralen Wert desjenigen weiteren Konfigurationsparameters zu bestimmen, dessen weiterer dezentraler Wert von dem weiteren zentralen Wert verschieden ist. Im Falle dieses zweiten Ausführungsbeispiels handelt es sich dabei um den Konfigurationsparameter des Installationskommandos. Dieser ist nämlich im Verlauf des Empfangs von Aktualisierungsdateien in der Fahrzeugeinrichtung 30 auf "0" zu halten, um zu vermeiden, dass die Fahrzeugeinrichtung im direkten Anschluss an den Empfang einer - insbesondere der ersten - Aktualisierungsdatei mit der Installation beginnt, obwohl dafür noch nicht alle Aktualisierungsdateien auf die Fahrzeugeinrichtung 30 übertragen wurden.
Der zentrale Prozessor 51 versendet mittels der zentralen Kommunikationseinrichtung 53 dann eine weitere Aktualisierungsaufforderungsnachricht 94, die von allen zentralen Werten nur den ermittelten weiteren zentralen Wert umfasst, über das Mobilfunknetz 40 an die Fahrzeugeinrichtung 30.
Der dezentrale Prozessor 11 der Fahrzeugeinrichtung 30 empfängt über den Mobilfunk-Sendeempfänger 13 diese weitere Aktualisierungsaufforderungsnachricht 94, veranlasst die Speicherung des weiteren zentralen Wertes des Konfigurationsparameters des Installationskommandos anstelle seines dezentralen Wertes in dem Sicherheitsmodul 18. Nach erneuter Auslesung aller Werte der in dieser Weise aktualisierten Ist-Konfiguration der Fahrzeugeinrichtung 30 aus dem Sicherheitsmodul 18 bildet der Prozessor 11 der Fahrzeugeinrichtung 30 unter Anwendung der Hashfunktion auf die aktualisierte Ist-Konfiguratiön einen finalen dezentralen Hashwert 87 und weist den Mobilfunk-Sendeempfänger 13 an, den finalen dezentralen Hashwert 87 der aktualisierten Ist-Konfiguration, die den ersten zentralen Wert (Fahrzeugkennzeichen "FKZ-neu") und den weiteren zentralen Wert (Installationskommando "0") umfasst, an die zentrale Datenverarbeitungseinrichtung 50 zu senden.
Die zentrale Datenverarbeitungseinrichtung 50 sendet daraufhin eine Aktualisierungsbeendigungsnachricht 98 an die Fahrzeugeinrichtung 30, obwohl die aktualisierte Ist-Konfiguration noch nicht in allen ihren Konfigurationsparameterwerten mit den zentralen Werten der Soll-Konfiguration übereinstimmt. Diese Entscheidung kann der zentrale Prozessor 51 unter einem Kriterium oder mehreren Kriterien treffen.
So kann beispielweise ein besonderer zentraler Wert der Soll-Konfiguration in Verknüpfung mit einer besonderen Zeitangabe von Datum und optional Uhrzeit in dem zweiten zentralen Datenspeicher 57 gespeichert sein, die die zentrale Datenverarbeitungseinrichtung 50 einen zentralen Zeitgeber (nicht dargestellt) umfassen und die zentrale Datenverarbeitungseinrichtung 50 - insbesondere dessen zentraler Prozessor 51 - ausgebildet sein, festzustellen dass der besondere zentrale Wert eines besonderen Konfigurationsparameters von einem besonderen dezentralen Wert dieses Konfigurationsparameters der Ist-Konfiguration verschieden ist, zu prüfen ob die aktuelle Zeitangabe des zentralen Zeitgebers gleich oder größer ist als die besondere Zeitangabe und nur dann den besonderen zentralen Wert in einer der weiteren Aktualisierungsaufforderungsnachricht 94 folgenden Aktualisierungsaufforderungsnachricht (nicht dargestellt) an die Fahrzeugeinrichtung 30 zu senden, wenn die aktuelle Zeitangabe des dezentralen Zeitgebers gleich oder größer ist als die besondere Zeitangabe.
Im Falle dieses zweiten Ausführungsbeispiels ist die Aktualisierungsdatei "patch 9.1" mit einer solchen besonderen Zeitangabe versehen, die später als die aktuelle Zeitangabe ist. Das gleiche gilt für den Wert der Software-Version. Dies führt dazu, dass eine Aktualisierung dieser Konfigurationsparameter noch nicht stattfindet und auf einen Zeitpunkt verschoben wird, dessen aktuelle Zeitangabe später als die der besonderen Zeitangabe ist.
Ein weiteres Kriterium kann sein, dass die zentrale Datenverarbeitungseinrichtung 50 hinsichtlich des Empfangs, der Speicherung, der Verarbeitung und/ oder des Versands von Nachrichten eine bestimmte Auslastung überschreitet. Für die Anwendung dieses Kriterium ist die zentrale Datenverarbeitungseinrichtung 50 ausgebildet, ihre Auslastung hinsichtlich des Empfangs, der Speicherung, der Verarbeitung und/ oder des Versands von Nachrichten von anderen/ an andere Fahrzeugeinrichtungen als der Fahrzeugeinrichtung 30 zu ermitteln mit einer vorgegeben Auslastung zu vergleichen. Liegt die ermittelte Auslastung über der vorgegeben Auslastung, so unterbricht die zentrale Datenverarbeitungseinrichtung 50 den Aktualisierungsprozess durch Senden der Aktualisierungsbeendigungsnachricht 98, bevor die Aktualisierung vollständig durchgeführt wird.

### Bezugszeichenliste

- 10: Fahrzeuggerät
- 11: Fahrzeuggerät-Prozessor
- 12: GNSS-Positionsbestimmungseinrichtung
- 12a: GNSS-Empfänger
- 12b: GNSS-Empfangsantenne
- 13: Mobilfunk-Sendeempfänger (fahrzeugseitig)
- 13b: Mobilfunk-Antenne (fahrzeugseitig)
- 14: Funkuhr
- 15: Anzeigeeinrichtung
- 16a: Gyroskop
- 16b: Weggeber
- 17a: Daten-Schreib-Lese-Speicher
- 17b: Arbeitsspeicher
- 18: Sicherheitsmodul
- 18a: autonomes Steuermodul des Sicherheitsmoduls 18
- 18b: Speicherbereich des Sicherheitsmoduls 18
- 19: Stromversorgungsanschluss
- 19a: Batterie
- 20: DSRC-Kommunikationsmodul (fahrzeugseitig)
- 21: DSRC-Kommunikationsmodul-Prozessor
- 22: DSRC-Kommunikationsmodul-GNSS-Positionsbestimmungseinrichtung
- 22b: DSRC-Kommunikationsmodul-GNSS-Empfangsantenne
- 23: DSRC-Sendeempfänger (fahrzeugseitig)
- 23b: DSRC-Sende- und Empfangsmittel
- 25: DSRC-Kommunikationsmodul-Signalisierungsmittel
- 27a: DSRC-Kommunikationsmodul-Daten-Schreib-Lese-Speicher
- 27b: DSRC-Kommunikationsmodul-Arbeitsspeicher
- 29a: DSRC-Kommunikationsmodul-Batterie
- 30: Fahrzeugeinrichtung
- 31: Fahrzeugkennzeichenschild
- 35: Fahrzeug
- 40: Mobilfunknetz
- 50: zentrale Datenverarbeitungseinrichtung
- 51: zentraler Prozessor
- 53: zentrale Kommunikationseinrichtung
- 56: erster zentraler Datenspeicher
- 57: zweiter zentraler Datenspeicher
- 58: Mautzentrale
- 60: Kontrolleinrichtung
- 61: Kontrollbrücke
- 62: Bildaufnahmeeinrichtung
- 63: Kontrollgerät
- 63a: DSRC-Kommunikationseinrichtung (straßenseitig)
- 64: Fahrzeugkontur-Erfassungseinrichtung
- 81: initialer dezentraler Hashwert
- 83: intermediärer dezentraler Hashwert
- 87: finaler dezentraler Hashwert
- 91: initiale Statusnachricht
- 92: erste Aktualisierungsaufforderungsnachricht
- 94: weitere Aktualisierungsaufforderungsnachricht
- 98: Aktualisierungsbeendigungsnachricht

## Patentansprüche

1. Verfahren zur Aktualisierung von wenigstens einem Wert eines Konfigurationsparameters in einer Fahrzeugeinrichtung (30) mittels einer zentralen Datenverarbeitungseinrichtung (50), die abseits der Fahrzeugeinrichtung (30) angeordnet ist, wobei
eine in der Fahrzeugeinrichtung (30) gespeicherte aktualisierungsbedürftige Ist-Konfiguration von dezentralen Werten mehrerer Konfigurationsparameter der Fahrzeugeinrichtung (30) in
eine in der Fahrzeugeinrichtung (30) gespeicherte vollständig aktualisierte Ist-Konfiguration von Werten mehrerer Konfigurationsparameter der Fahrzeugeinrichtung (30) überführt wird, die
einer in der zentralen Datenverarbeitungseinrichtung (50) zugeordnet zu einer Kennung der Fahrzeugeinrichtung (30) gespeicherten Soll-Konfiguration von mehreren zentralen Werten dieser Konfigurationsparameter entspricht,
**dadurch gekennzeichnet, dass**
im Rahmen wenigstens einer zwischen der Fahrzeugeinrichtung (30) und der zentralen Datenverarbeitungseinrichtung (50) bestehenden Kommunikationsverbindung
a) die Fahrzeugeinrichtung (30) einen initialen dezentralen Hashwert (81) der aktualisierungsbedürftigen Ist-Konfiguration an die zentrale Datenverarbeitungseinrichtung (50) sendet,
b) die zentrale Datenverarbeitungseinrichtung (50) nach dem Empfang des initialen dezentralen Hashwerts (81)
i) den empfangenen initialen dezentralen Hashwert (81) mit einem zentralen Hashwert der Soll-Konfiguration vergleicht und im Falle eines Unterschieds zwischen dem initialen dezentralen Hashwert (81) und dem zentralen Hashwert.
ii) wenigstens einen ersten zentralen Wert wenigstens eines ersten Konfigurationsparameters, der von einem ersten dezentralen Wert des ersten Konfigurationsparameters verschieden ist, in einer ersten Aktualisierungsaufforderungsnachricht (92) an die Fahrzeugeinrichtung (30) sendet,
c) die Fahrzeugeinrichtung (30) nach dem Empfang der ersten Aktualisierungsaufforderungsnachricht (92) einen finalen dezentralen Hashwert (87) einer aktualisierten Ist-Konfiguration von Werten der mehreren Konfigurationsparameter, die den wenigstens einen ersten zentralen Wert des wenigstens einen ersten Konfigurationsparameters umfasst, an die zentrale Datenverarbeitungseinrichtung (50) sendet,
d) die zentrale Datenverarbeitungseinrichtung (50) infolge des Empfangs des finalen dezentralen Hashwerts (87)
i) den empfangenen finalen dezentralen Hashwert (87) mit einem zentralen Hashwert der Soll-Konfiguration vergleicht und im Falle einer Übereinstimmung des finalen dezentralen Hashwerts (87) mit dem zentralen Hashwert
ii) eine Aktualisierungsbeendigungsnachricht (98) an die Fahrzeugeinrichtung (30) sendet und/ oder eine mit der Fahrzeugeinrichtung (30) bestehende Kommunikationsverbindung abbricht, und
e) die Fahrzeugeinrichtung(30), falls sie die Aktualisierungsbeendigungsnachricht (98) empfängt, eine mit der zentralen Datenverarbeitungseinrichtung (50) bestehende Kommunikationsverbindung abbricht, sofern diese nicht seitens der zentralen Datenverarbeitungseinrichtung (50) abgebrochen wird.

2. Verfahren nach Anspruch 1 **dadurch gekennzeichnet, dass**
im Schritt b) ii) die zentrale Datenverarbeitungseinrichtung (50) die zentralen Werte aller Konfigurationsparameter der Soll-Konfiguration einschließlich des ersten zentralen Wertes des ersten Konfigurationsparameters in der ersten Aktualisierungsaufforderungsnachricht an die Fahrzeugeinrichtung (30) sendet.

3. Verfahren nach Anspruch 1 **dadurch gekennzeichnet, dass**
nach dem Schritt b) i) und vor dem Schritt b) ii) im Falle eines Unterschieds zwischen dem initialen dezentralen Hashwert (81) und dem zentralen Hashwert
i1) die zentrale Datenverarbeitungseinrichtung (50) eine Anforderungsnachricht an die Fahrzeugeinrichtung (30) sendet, mit der von der Fahrzeugeinrichtung (30) eine initiale Statusnachricht (91) angefordert wird,
i2) die Fahrzeugeinrichtung (30) infolge des Empfangs der Anforderungsnachricht in der initialen Statusnachricht (91) die aktualisierungsbedürftige Ist-Konfiguration mit den dezentralen Werten der Konfigurationsparameter an die zentrale Datenverarbeitungseinrichtung (50) sendet, und
i3) die zentrale Datenverarbeitungseinrichtung (50) infolge des Empfangs der initialen Statusnachricht (91) als den wenigstens einen ersten zentralen Wert denjenigen des wenigstens einen ersten Konfigurationsparameters ermittelt, dessen zentraler Wert von dem dezentralen Wert verschieden ist.

4. Verfahren nach Anspruch 3 **dadurch gekennzeichnet, dass**
im Schritt b) ii) die zentrale Datenverarbeitungseinrichtung (50) außer dem ersten zentralen Wert des ersten Konfigurationsparameters keinen weiteren zentralen Wert eines weiteren Konfigurationsparameters in der ersten Aktualisierungsaufforderungsnachricht an die Fahrzeugeinrichtung (30) sendet,
im Schritt c) in wenigstens einem dem Senden des finalen dezentralen Hashwerts (87) vorhergehenden Zwischenschritt
- die Fahrzeugeinrichtung (30) wenigstens einen intermediären dezentralen Hashwert (83) einer den ersten zentralen Wert des ersten Konfigurationsparameters umfassenden teilaktualisierten Ist-Konfiguration von Werten der mehreren Konfigurationsparameter an die zentrale Datenverarbeitungseinrichtung (50) sendet,
- die zentrale Datenverarbeitungseinrichtung (50) nach dem Empfang des intermediären dezentralen Hashwerts (87) wenigstens einen weiteren zentralen Wert, der von einem weiteren dezentralen Wert wenigstens eines weiteren Konfigurationsparameters verschieden ist, in wenigstens einer weiteren Aktualisierungsaufforderungsnachricht (94) an die Fahrzeugeinrichtung (30) sendet,
und die aktualisierte Ist-Konfiguration, von der im Schritt c) die Fahrzeugeinrichtung (30) den finalen dezentralen Hashwert (87) sendet, den ersten zentralen Wert des ersten Konfigurationsparameters und wenigstens einen weiteren zentralen Wert.des weiteren Konfigurationsparameters umfasst.

5. Verfahren nach Anspruch 4 **dadurch gekennzeichnet, dass**
in Schritt c) der Zwischenschritt so oft für weitere zentrale Werte verschiedener weiterer Konfigurationsparameter wiederholt wird, bis für die betreffende Fahrzeugeinrichtung (30) von keinem weiteren Konfigurationsparameter mehr ein weiterer zentraler Wert in der zentralen Datenverarbeitungseinrichtung (50) vorliegt, der von dem dezentralen Wert verschieden ist.

6. Verfahren nach Anspruch 4 oder 5 **dadurch gekennzeichnet, dass**
in Schritt c) der Zwischenschritt so oft für weitere zentrale Werte verschiedener weiterer Konfigurationsparameter wiederholt wird, bis alle Werte der mehreren Konfigurationsparameter der aktualisierten Ist-Konfiguration gleich den zentralen Werten der mehreren Konfigurationsparameter sind.

7. Verfahren nach einem der vorhergehenden Ansprüche **dadurch gekennzeichnet, dass**
vorhergehend zum oder im Schritt a) die Fahrzeugeinrichtung (30) zum Senden des initialen dezentralen Hashwerts (81) den Aufbau einer Kommunikationsverbindung zu der zentralen Datenverarbeitungseinrichtung (50) initiiert,
von dem Schritt a) bis zum Schritt e) über in alle dazwischenliegenden Schritten b) bis d) hinweg die Fahrzeugeinrichtung (30) und die zentrale Datenverarbeitungseinrichtung (50) die aufgebaute Kommunikationsverbindung zwischen der Fahrzeugeinrichtung (30) und der zentralen Datenverarbeitungseinrichtung (50) aufrecht erhalten und nachfolgend zum oder im Schritt e) die Fahrzeugeinrichtung (30) die aufgebaute Kommunikationsverbindung zu der zentralen Datenverarbeitungseinrichtung (50) abbricht.

8. Verfahren nach einem der Ansprüche 1 bis 5 **dadurch gekennzeichnet, dass**
vorhergehend zum oder im Schritt a) die Fahrzeugeinrichtung (30) zum Senden des initialen dezentralen Hashwerts (81) den Aufbau einer initialen Kommunikationsverbindung zu der zentralen Datenverarbeitungseinrichtung (50) initiiert,
im Schritt b) die zentrale Datenverarbeitungseinrichtung (50) mit der ersten Aktualisierungsaufforderungsnachricht (92) eine Aufforderung an die Fahrzeugeinrichtung (30) sendet, die aufgebaute erste Kommunikationsverbindung abzubrechen, oder nach dem Versand der ersten Aktualisierungsaufforderungsnachricht (92) die aufgebaute erste Kommunikationsverbindung von sich aus abbricht,
vorhergehend zum oder im Schritt c) die Fahrzeugeinrichtung (30) zum Senden des finalen dezentralen Hashwerts (87) den Aufbau einer finalen Kommunikationsverbindung zu der zentralen Datenverarbeitungseinrichtung (50) initiiert, und nachfolgend im Schritt d) oder e) die Fahrzeugeinrichtung (30) oder die zentrale Datenverarbeitungseinrichtung (50) die finale Kommunikationsverbindung zwischen der Fahrzeugeinrichtung (30) und der zentralen Datenverarbeitungseinrichtung (50) abbricht.

9. Verfahren nach einem der vorhergehenden Ansprüche **dadurch gekennzeichnet, dass**
einer die Schritte a) bis d) oder e) umfassende Aktualisierungstätigkeitsphase eine Aktualisierungsbereitschaftsphase vorangeht, in der der die Fahrzeugeinrichtung (30) ausgebildet ist, ein Ereignis zur Auslösung einer Aktualisierungstätigkeit zu erfassen,
wobei Aktualisierungstätigkeitsphase infolge der Erfassung eines Ereignisses zur Auslösung einer Aktualisierungstätigkeit in der Fahrzeugeinrichtung (30) beginnt.

10. Verfahren nach einem der vorhergehenden Ansprüche **dadurch gekennzeichnet, dass** einer die Schritte a) bis d) oder e) umfassende Aktualisierungstätigkeitsphase eine Aktualisierungserfolgsphase nachfolgt, in der die Fahrzeugeinrichtung (30) ausgebildet ist, infolge des Empfangs eines Anforderungssignals von einer straßenseitigen Kommunikationseinrichtung (63a) wenigstens einen angeforderten dezentralen Wert wenigstens eines angeforderte Konfigurationsparameters der aktualisierten Ist-Konfiguration im Rahmen eines Antwortsignals an diese straßenseitige Kommunikationseinrichtung (63a) zu senden.

11. Fahrzeugeinrichtung (30),
in der eine aktualisierungsbedürftige Ist-Konfiguration von dezentralen Werten mehrerer Konfigurationsparameter der Fahrzeugeinrichtung (30) gespeichert ist,
**dadurch gekennzeichnet, dass**
die Fahrzeugeinrichtung (30) ausgebildet ist,
im Rahmen wenigstens einer zwischen der Fahrzeugeinrichtung (30) und einer abseits der Fahrzeugeinrichtung (30) angeordneten zentralen Datenverarbeitungseinrichtung (50) bestehenden Kommunikationsverbindung
a) einen initialen dezentralen Hashwert (81) der aktualisierungsbedürftigen Ist-Konfiguration an eine abseits der Fahrzeugeinrichtung (30) angeordnete zentrale Datenverarbeitungseinrichtung (50) zu senden,
b) eine erste Aktualisierungsaufforderungsnachricht (92) mit wenigstens einem ersten zentralen Wert eines ersten Konfigurationsparameters einer in der zentralen Datenverarbeitungseinrichtung (50) gespeicherten Soll-Konfiguration von zentralen Werten der mehreren Konfigurationsparameter dieser Fahrzeugeinrichtung (30), der von einem ersten dezentralen Wert des ersten Konfigurationsparameters verschieden ist, von der zentralen Datenverarbeitungseinrichtung (30) zu empfangen,
c) nach dem Empfang der ersten Aktualisierungsaufforderungsnachricht (92) einen finalen dezentralen Hashwert (87) einer aktualisierten Ist-Konfiguration von Werten der mehreren Konfigurationsparameter, die den wenigstens einen ersten zentralen Wert des wenigstens einen ersten Konfigürationsparameters umfasst, an die zentrale Datenverarbeitungseinrichtung (50) zu senden,
d) eine Aktualisierungserfolgsnachricht (98) von der zentralen Datenverarbeitungseinrichtung (50) zu empfangen und
e) infolge des Empfangs der Aktualisierungserfolgsnachricht (98) die zu der zentralen Datenverarbeitungseinrichtung (50) bestehende Kommunikationsverbindung abzubrechen.

12. Fahrzeugeinrichtung nach Anspruch 11 **dadurch gekennzeichnet, dass**
die Fahrzeugeinrichtung (30) ausgebildet ist, anstatt der ersten Aktualisierungsaufforderungsnachricht eine Bestätigungsnachricht darüber von der zentralen Datenverarbeitungseinrichtung (50) zu empfangen, dass die Ist-Konfiguration mit der Soll-Konfiguration übereinstimmt, und infolge des Empfangs der Bestätigungsnachricht die zu der zentralen Datenverarbeitungseinrichtung bestehende Kommunikationsverbindung abzubrechen, ohne zuvor die finale Statusnachricht an die zentrale Datenverarbeitungseinrichtung (30) zu senden.

13. Zentrale Datenverarbeitungseinrichtung (50),
in der, zugeordnet zu einer Kennung einer abseits der zentralen Datenverarbeitungseinrichtung (50) angeordneten Fahrzeugeinrichtung (30), eine Soll-Konfiguration von zentralen Werten mehrerer Konfigurationsparameter dieser Fahrzeugeinrichtung (30) gespeichert ist,
**dadurch gekennzeichnet, dass**
die zentrale Datenverarbeitungseinrichtung (50) ausgebildet ist,
im Rahmen wenigstens einer zwischen der Fahrzeugeinrichtung (30) und der zentralen Datenverarbeitungseinrichtung (50) bestehenden Kommunikationsverbindung
a) einen initialen dezentralen Hashwert (81) einer in der Fahrzeugeinrichtung (30) gespeicherten aktualisierungsbedürftigen Ist-Konfiguration von dezentralen Werten der mehreren Konfigurationsparameter von der Fahrzeugeinrichtung (30) zu empfangen,
b) nach dem Empfang des initialen dezentralen Hashwerts (81)
i) den empfangenen initialen dezentralen Hashwert (81) mit einem zentralen Hashwert der Soll-Konfiguration zu vergleichen und im Falle eines Unterschieds zwischen dem initialen dezentralen Hashwert und dem zentralen Hashwert
ii) wenigstens einen ersten zentralen Wert eines ersten Konfigurationsparameters, der von einem ersten dezentralen Wert des ersten Konfigurationsparameters verschieden ist, in einer ersten Aktualisierungsaufforderungsnachricht (92) an die Fahrzeugeinrichtung (30) zu senden,
c) einen finalen dezentralen Hashwert (87) einer den ersten zentralen Wertes des ersten Konfigurationsparameters umfassenden aktualisierten Ist-Konfiguration von Werten der mehreren Konfigurationsparameter von der Fahrzeugeinrichtung (30) zu empfangen und
d) nach dem Empfang des finalen dezentralen Hashwerts eine Aktualisierungsbeendigungsnachricht (98) an die Fahrzeugeinrichtung (30) zu senden und/ oder eine mit der Fahrzeugeinrichtung (30) bestehende Kommunikationsverbindung abzubrechen.

14. Zentrale Datenverarbeitungseinrichtung (50) nach Anspruch 13 **dadurch gekennzeichnet, dass** die zentrale Datenverarbeitungseinrichtung (50) ausgebildet ist, im Falle einer Gleichheit des initialen dezentralen Hashwerts (81) und des zentralen Hashwerts eine Bestätigungsnachricht darüber an die Fahrzeugeinrichtung (30) zu senden, dass die aktualisierungsbedürftige Ist-Konfiguration der Soll-Konfiguration entspricht.

15. Mautsystem mit einer Fahrzeugeinrichtung (30) nach einem der Ansprüche 11 bis 12 und einer zentralen Datenverarbeitungseinrichtung (50) nach einem der Ansprüche 13 bis 14 **dadurch gekennzeichnet, dass** die Fahrzeugeinrichtung (30) ausgebildet ist,
Positionsdaten zu erfassen, die erfassten Positionsdaten zu einer Streckeninformation zu verarbeiten und die Streckeninformation zusammen mit wenigstens einem dezentralen Wert wenigstens eines Konfigurationsparameters der Ist-Konfiguration an die zentrale Datenverarbeitungseinrichtung (50) zu senden,
und die zentrale Datenverarbeitungseinrichtung (50) ausgebildet ist,
in Abhängigkeit von der empfangenen Streckeninformation und dem wenigstens einen empfangenen dezentralen Wert des wenigstens einen Konfgurationsparameters der Ist-Konfiguration eine Mautgebühr zu bestimmen.
